# EUROPEAN PATENT APPLICATION

(11) **EP 4 831 805 A1**
(43) Date of publication of application: **28.10.2026**
(21) Application number: 25738572.4
(22) Date of filing: 10.01.2025
(51) Int. Cl.: G06F 9/455

(54) **SERVER SYSTEM BASED ON PUBLIC CLOUD TECHNOLOGY AND ACCESS METHOD THEREFOR**

(30) Priority: 12.01.2024 CN 202410050423; 29.04.2024 CN 202410547732
(71) Applicant: Huawei Cloud Computing Technologies Co., Ltd., Gui'an New District, Guizhou 550025 (CN)
(72) Inventor: LI, Mohua, Guiyang, Guizhou 550025 (CN); MAO, Xiubin, Guiyang, Guizhou 550025 (CN); LUAN, Jianhai, Guiyang, Guizhou 550025 (CN); GONG, Lei, Guiyang, Guizhou 550025 (CN); XIE, Huaguo, Guiyang, Guizhou 550025 (CN)
(74) Representative: Huawei European IPR
(86) International application number: PCT/CN2025/071798
(87) International publication number: WO 2025/149045

(57) **Abstract**

This application discloses a public cloud technology-based server system and an access method thereof, pertaining to the field of cloud service technologies. The server system includes a server and an external device inserted into the server. A virtual machine manager in the server is configured to provide a virtual external device and a virtual memory for a virtual machine in the server. The virtual external device is obtained by device emulation based on the external device. The virtual memory is obtained by device emulation based on a memory configured for the external device. A virtual device driver of the virtual external device is configured to send, when the virtual external device accesses a target GPA of the virtual memory, an access request carrying the target GPA to the external device. The external device is configured to: obtain, based on the access request, a target host physical address corresponding to the target guest physical address; obtain target data recorded at the target host physical address; and send the target data to the virtual device driver. This application effectively improves the address translation performance of the server system.

## Description

### TECHNICAL FIELD

This application relates to the field of cloud service technologies, and in particular, to a public cloud technology-based server system and an access method thereof.

### BACKGROUND

With the increasingly widespread application of cloud computing, the use of external devices on cloud servers is steadily increasing. As the quantity of external devices grows, a quantity of correspondences between GPAs and HPAs that must be recorded by a remapping device for address translation increases accordingly. However, because the remapping device can record only a fixed quantity of correspondences between the GPAs and the HPAs, some correspondences may not be recorded. Consequently, when address translation relies on an unrecorded correspondence between the GPA and the HPA, address translation cannot be performed, leading to degraded address translation performance of the remapping device and in turn, reduced operational performance of the external device.

### SUMMARY

This application provides a public cloud technology-based server system and an access method thereof. This application effectively improves the address translation performance of the server system, thereby improving the operational performance (for example, DMA performance) of external devices and increasing the efficiency in memory management. The technical solutions provided in this application are as follows.

According to a first aspect, this application provides a public cloud technology-based server system. The server system includes a server and an external device inserted into the server. A connection channel is established between the server and the external device. The server is provided with a virtual machine and a virtual machine manager, the virtual machine manager is configured to provide virtual hardware for the virtual machine, the virtual hardware includes a virtual external device and a virtual memory, the virtual external device is obtained by device emulation based on the external device, the virtual memory is obtained by device emulation based on a memory configured for the external device, the virtual machine is provided with a virtual device driver for the virtual external device, and the virtual device driver is configured to send an access request to the external device when the virtual external device accesses a target guest physical address of the virtual memory, where the access request carries the target guest physical address. The external device is configured to: query, based on the access request, a first correspondence between a guest physical address and a host physical address to obtain a target host physical address corresponding to the target guest physical address; obtain target data recorded at the target host physical address; and send the target data to the virtual device driver.

It can be learned from the foregoing that, it is equivalent to that the server system offloads an address translation function to the external device, so that the external device directly manages memory allocated to the virtual machine, and shares a task of performing address translation on a target guest physical address in an access request. In this way, an address translation device like an IOMMU/SMMU in the server does not need to execute the address translation task, and a TLB of the address translation device like the IOMMU/SMMU in the server does not need to record a correspondence of a target guest physical address accessed by the virtual external device of the external device, thereby reducing a quantity of correspondences that need to be recorded in the TLB, and alleviating a conflict between a small quantity of page table entries of the TLB and an excessive quantity of external devices. This reduces a probability of a TLB page fault in an address translation process, effectively improves the address translation performance of the server system, thereby improving operational performance (for example, DMA performance) of the external devices and increasing the efficiency in memory management.

In a possible implementation, the server is further provided with an address management module. The external device is further configured to: when the first correspondence does not record the target host physical address corresponding to the target guest physical address, send a message indicating a matching failure to the address management module, where the message carries the target guest physical address. The address management module is configured to forward the message to the virtual machine manager. The virtual machine manager is configured to: allocate a memory block in the memory for the target guest physical address based on the message, establish a second correspondence between a host physical address of the memory block and the target guest physical address, and send the second correspondence to the address management module. The address management module is configured to update the first correspondence based on the second correspondence.

It can be learned from the foregoing that the server system provided in this application can perform related processing, for example, perform page fault processing, when querying a correspondence based on the target guest physical address results in a miss, to resolve the miss problem. In this way, memory pinning can be avoided before the virtual machine is started, and global memory locking can be released. In cloud scenarios, when the external device is passed through to the virtual machine, memory pinning can be avoided, so that overcommitment and reuse of the virtual machine memory can be implemented without user awareness (without imposing special requirements on the virtual machine system). This improves overall memory usage of the server and ensures that performance of the server does not deteriorate. This feature is especially obvious in scenarios with high memory pressure. In addition, because memory pinning is avoided, there is no need to configure a large amount of memory in a cloud scenario because of pre-allocation of the memory by the virtual machine, so that memory usage costs in the cloud scenario can be reduced, a problem that a memory cost of a public cloud gradually increases can be resolved, and market competitiveness of the public cloud is enhanced.

In a possible implementation, the server is further provided with the address management module. The virtual machine manager is configured to: perform, based on a specification of the virtual machine, device emulation for the virtual machine to obtain the virtual memory, configure guest physical address space of the virtual memory, establish a correspondence between a host physical address of a memory block configured in the memory for the external device and a guest physical address in the guest physical address space, and send the correspondence to the address management module.

In a possible implementation, configuration information of the external device indicates that the external device supports a translated request, and the access request indicates that an address carried in the access request is a host physical address. In this way, when the server is compatible with an original address translation function, it can be ensured that the access request using a capability of the external device can be processed by the external device, instead of being processed by the original address translation function of the server, that is, the original address translation function of the server is bypassed (bypassed).

In a possible implementation, the memory configured for the external device includes one or more of the following: a memory inserted into the server or a shared memory of the server.

According to a second aspect, this application provides a method for accessing a public cloud technology-based server system. The server system includes a server and an external device inserted into the server. A connection channel is established between the server and the external device. The server is provided with a virtual machine and a virtual machine manager. The virtual machine manager is configured to provide virtual hardware for the virtual machine. The virtual hardware includes a virtual external device and a virtual memory. The virtual external device is obtained by device emulation based on the external device. The virtual memory is obtained by device emulation based on a memory configured for the external device. The virtual machine is provided with a virtual device driver for the virtual external device. The method includes: The virtual device driver sends an access request to the external device when the virtual external device accesses a target guest physical address of the virtual memory, where the access request carries the target guest physical address. The external device queries, based on the access request, a first correspondence between a guest physical address and a host physical address to obtain a target host physical address corresponding to the target guest physical address, obtains target data recorded at the target host physical address, and sends the target data to the virtual device driver.

In a possible implementation, the server is further provided with an address management module. The method further includes: When the first correspondence does not record the target host physical address corresponding to the target guest physical address, the external device sends a message indicating a matching failure to the address management module, where the message carries the target guest physical address; the address management module forwards the message to the virtual machine manager; the virtual machine manager allocates a memory block in the memory for the target guest physical address based on the message, establishes a second correspondence between a host physical address of the memory block and the target guest physical address, and sends the second correspondence to the address management module; and the address management module updates the first correspondence based on the second correspondence.

In a possible implementation, the server is further provided with the address management module. The method further includes: The virtual machine manager performs, based on a specification of the virtual machine device, emulation for the virtual machine to obtain the virtual memory, configures guest physical address space of the virtual memory, establishes a correspondence between a host physical address of a memory block configured in the memory for the external device and a guest physical address in the guest physical address space, and sends the correspondence to the address management module.

In a possible implementation, configuration information of the external device indicates that the external device supports a translated request, and the access request indicates that an address carried in the access request is a host physical address.

In a possible implementation, the memory configured for the external device includes one or more of the following: a memory inserted into the server or a shared memory of the server.

According to a third aspect, this application provides a compute device, including a memory and a processor. The memory stores program instructions, and the processor runs the program instructions to perform the method provided in any one of the second aspect and the possible implementations of the second aspect in this application.

According to a fourth aspect, this application provides a compute device cluster, including a plurality of compute devices. The plurality of compute devices include a plurality of processors and a plurality of memories, the plurality of memories store program instructions, and the plurality of processors run the program instructions, so that the compute device cluster performs the method provided in any one of the second aspect and the possible implementations of the second aspect in this application.

According to a fifth aspect, this application provides a computer-readable storage medium. The computer-readable storage medium is a non-volatile computer-readable storage medium, and the computer-readable storage medium includes program instructions. When the program instructions are run on a compute device, the compute device is enabled to perform the method provided in any one of the second aspect and the possible implementations of the second aspect in this application.

According to a sixth aspect, this application provides a computer program product including instructions. When the computer program product runs on a computer, the computer is enabled to perform the method provided in any one of the second aspect and the possible implementations of the second aspect in this application.

### BRIEF DESCRIPTION OF DRAWINGS

FIG. 1 is a diagram of a correspondence between a GPA and an HPA according to an embodiment of this application;
FIG. 2 is a diagram of a structure of an implementation scenario in this application according to an embodiment of this application;
FIG. 3 is a diagram of cloud resource deployment according to an embodiment of this application;
FIG. 4 is a diagram of a structure of a server system according to an embodiment of this application;
FIG. 5 is a logical diagram of a server system according to an embodiment of this application;
FIG. 6 is a logical diagram of another server system according to an embodiment of this application;
FIG. 7 is a logical diagram of still another server system according to an embodiment of this application;
FIG. 8 is a diagram of querying a correspondence according to an embodiment of this application;
FIG. 9 is a diagram of a structure of another server system according to an embodiment of this application;
FIG. 10 is a diagram of a context entry according to an embodiment of this application;
FIG. 11 is a diagram of a TLP header format according to an embodiment of this application;
FIG. 12 is a diagram of interaction between a user mode and a kernel mode according to an embodiment of this application;
FIG. 13 is a diagram of an ioctl command format according to an embodiment of this application;
FIG. 14 is a diagram of interaction between a kernel mode and an external device according to an embodiment of this application;
FIG. 15 is a diagram of a server system including a plurality of external devices according to an embodiment of this application;
FIG. 16 is a flowchart of a method for accessing a public cloud technology-based server system according to an embodiment of this application;
FIG. 17 is a flowchart of another method for accessing a public cloud technology-based server system according to an embodiment of this application;
FIG. 18 is a diagram of a structure of a compute device according to an embodiment of this application;
FIG. 19 is a diagram of a structure of a compute device cluster according to an embodiment of this application; and
FIG. 20 is a diagram of a structure of another compute device cluster according to an embodiment of this application.

### DESCRIPTION OF EMBODIMENTS

To make the objectives, technical solutions, and advantages of this application clearer, the following further describes the implementations of this application in detail with reference to the accompanying drawings.

For ease of understanding, the following first describes technologies and backgrounds in embodiments of this application.

Based on an internet (Internet) network, a cloud data center provides operation and maintenance facilities and related service systems for devices that collect, store, process, and send data in a centralized manner. Conceptually, the cloud data center can be regarded as a public commercial internet "equipment room", and is also a professional information technology (information technology, IT) service and an important infrastructure of an IT industry. The cloud data center is not only a service concept, but also a network concept, which forms a part of a network infrastructure. Like a backbone network and an access network, the cloud data center provides high-end data delivery (data delivery) services and high-speed access services.

Cloud computing (cloud computing) is a type of distributed computing, and is a network that manages and schedules a large quantity of compute resources and storage resources in a unified manner, to provide an on-demand service for a user. Both the compute resource and the storage resource are provided by a compute device disposed in the data center. In addition, the cloud computing may provide a plurality of types of services for the user, such as infrastructure as a service (infrastructure as a service, IaaS), platform as a service (platform as a service, PaaS), and software as a service (software as a service, SaaS). The infrastructure as a service is used to provide a virtual machine or another resource as a service for a tenant. The platform as a service is used to provide a development platform as a service for the tenant. The software as a service is used to provide an application (application, app, also referred to as an application program) as a service for a customer.

A host (physical machine, PM) is a physical resource for carrying a virtualization technology. The host is also referred to as a physical machine. Generally, a host configured to deploy a virtual instance is a physical server. The physical machine has a plurality of physical devices. For example, the physical server has physical devices such as a processor and a memory. A plurality of virtual instances may be deployed on one host, and the plurality of virtual instances deployed on the same host share physical resources of the host. Based on different usage conditions, a plurality of virtual instances deployed on one host may belong to a same tenant or different tenants.

Virtualization (virtualization) is a resource management technology. Virtualization can abstract, convert, and present various physical resources of a host, such as compute resources, network resources, and storage resources. This eliminates an indivisible barrier between physical structures of the host, enabling the tenant to utilize these resources in manners superior to an original configuration. Resources obtained through virtualization are referred to as virtual resources. The virtual resources are not limited by a deployment mode, a setting location, or a physical configuration of existing physical resources.

The virtual resources are usually provided for the tenant in a form of virtual instances. Hardware resources of a physical server can be used by one or more tenants at a granularity of virtual instances. Different virtual instances are isolated from each other, so that tenants can use physical resources conveniently and flexibly on the premise of secure isolation. This greatly improves utilization of the physical resources. In this application, the virtual instance may be a virtual machine, a container, an independent process (for example, a function), or the like. The virtual instance may also be referred to as a cloud server (elastic compute service, ECS) or an elastic instance (naming conventions differ across different cloud service providers).

A virtual machine (virtual machine, VM) is a complete computer system emulated by software, has functions of a complete hardware system, and runs in a completely isolated environment. All tasks that can be completed on a server can be implemented on a virtual machine. When the virtual machine is created in the server, a part of a hard disk drive and a part of a memory capacity in a physical machine need to be used as a hard disk drive and a memory capacity of the virtual machine. Each virtual machine has an independent hard disk drive and operating system. A tenant of the virtual machine can operate the virtual machine as the tenant uses the server. Running environments (for example, a virtual machine application, an operating system, and virtual hardware) in different virtual machines are completely isolated. If communication needs to be performed between different virtual machines, a network packet needs to be forwarded via a virtual manager.

A container provides a lightweight virtual running environment. The container may be obtained by packaging all code, libraries, dependencies, and the like of an application of a tenant into an image. When being executed, the image runs in the virtual running environment. In this case, the container is a runtime instance of the image, and is similar to a lightweight sandbox and can be enabled, started, stopped, and deleted. The image does not share resources such as a memory, a processor (for example, a central processing unit (central processing unit, CPU)), and a magnetic disk of a host with another image. This implements container isolation between the image and the host and between the image and the another image, and ensures that a process inside the container cannot monitor any process or resource outside the container. An infrastructure of the container may be hardware of a server or a virtual machine on a cloud (that is, the container may also be deployed in the virtual machine). An operating system uses a Linux kernel and supports namespace and cgroup. namespace is used to isolate processes, and cgroup is used to allocate process resources. The resources are specifically virtual processors and memory allocated to the processes. A container engine is similar to a virtual machine manager and runs in an operating system to manage a container. Unlike a virtual machine, which comes with an operating system, the container has no operating system. The container is run as a process in a host operating system. Therefore, the container is started faster than the virtual machine, and is particularly suitable for a lightweight application. In addition, one host can run thousands of containers (processes) simultaneously.

Direct memory access (direct memory access, DMA) may also be referred to as a direct memory operation or a group data transfer mode, and is a data interaction mode in which an external device directly accesses data from a memory of a computer without using a central processing unit (central processing unit, CPU) of the computer. During data transmission in the DMA mode, the CPU of the computer delivers an instruction to a DMA controller, to instruct the DMA controller to control data transmission. After completing data transmission, the DMA controller feeds back transmission complete information to the CPU. It can be learned that, in the DMA data transmission process, the CPU of the computer does not need to perform a transmission operation, and operations such as instruction fetching, data obtaining, and data sending by the CPU of the computer may be omitted, thereby reducing resource occupation of the CPU of the computer and saving system resources.

The DMA may include remote DMA (remote direct memory access, RDMA) and local DMA. The RDMA is a data transmission mode in which data is directly transmitted from a memory of a computer to another computer through a network without intervention of operating systems of the two computers. The local DMA is a data transmission mode in which a network is not required.

A peripheral component interconnect express (peripheral component interconnect express, PCIe) bus is a high-speed serial computer expansion bus.

A memory (memory) may also be referred to as an internal memory or a main memory, and is configured to temporarily store computational data of a CPU and data exchanged with an external memory like a hard disk drive.

External devices (external devices) are briefly referred to as "peripherals", and are a general term for input and output devices (including an external memory) in a computer system. The external device functions to transmit, transfer, and store data and information, and is an important part of the computer system. The peripherals include any device other than the host. The peripherals are auxiliary or supplementary devices connected to a computer. The peripherals can expand the computer system. The external device is, for example, a network interface card, an external memory (like a hard disk drive, a magnetic disk, and a graphics card), a graphics processing unit (graphics processing unit, GPU), an intelligent processing unit (intelligent processing unit, IPU), and a data flow processing unit (data Processing Unit, DPU). The network interface card may also be referred to as a network interface controller (network interface controller, NIC), a network adapter, or a local area network receiver, and is a type of computer hardware designed to allow a host or a compute device to communicate through a network.

A purpose of a memory virtualization technology is to provide continuous physical memory space starting from an address 0 for a virtual machine, and effectively isolate and schedule memory resources between virtual machines. The memory virtualization technology mainly relates to translation of a guest virtual address (guest virtual address, GVA) to a guest physical address (guest physical address, GPA), then to a host virtual address (host virtual address, HVA), and finally to a host physical address (host physical address, HPA).

However, in the virtualization technology, a plurality of virtual machines usually run on a physical host, and each virtual machine considers that the virtual machine exclusively occupies memory space of the physical host. Therefore, the virtual machine uses a GPA to represent the memory space owned by the virtual machine, where the memory space is considered to be continuous by the virtual machine (that is, it may be understood as that the virtual machine considers that the virtual machine possesses an entire physical memory module).

The GVA is an address formed by mapping the GPA by an operating system of the virtual machine. The operating system of the virtual machine provides the GVA for a process or application software configured in the operating system of the virtual machine to use. The operating system of the virtual machine records a correspondence between the GVA and the GPA. Conversion from the GVA to the GPA is implemented based on a page table of the operating system of the virtual machine.

The HPA is an actual physical memory address, and the HVA is an address formed by mapping the HPA by a host operating system. The host operating system provides the HVA for a process (for example, a virtual machine) in the operating system to use. The host operating system records a correspondence between the HVA and the HPA. Conversion from the HVA to the HPA is implemented based on a page table of the host operating system.

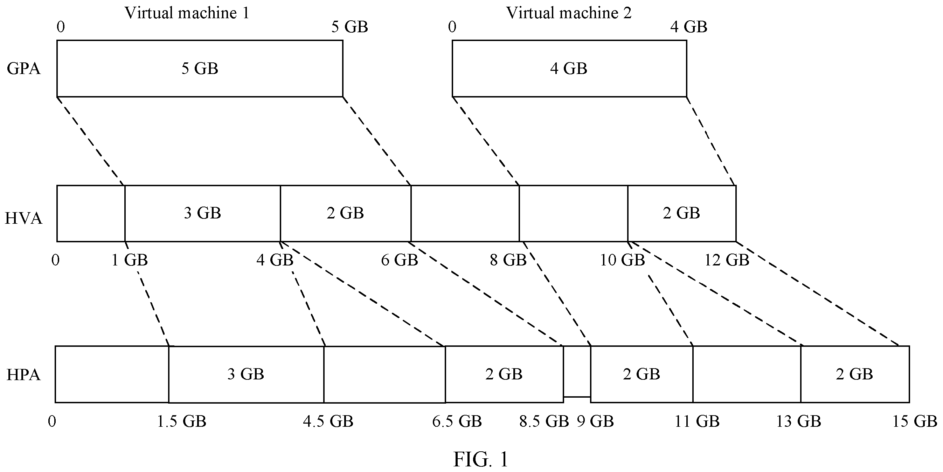

In FIG. 1, a server (referred to as a host) is provided with a virtual machine 1 and a virtual machine 2, and a virtual machine manager (also referred to as a hypervisor) of the host sets a GPA address range of the virtual machine 1 to 0 GB to 5 GB, which corresponds to an HPA address range of 1.5 GB to 4.5 GB and 6.5 GB to 8.5 GB in a physical memory. In addition, the virtual machine manager of the host sets the GPA address range of the virtual machine 2 to 0 GB to 4 GB, which corresponds to an HPA address range of 9 GB to 11 GB and 13 GB to 15 GB in the physical memory. Therefore, the virtual machine 1 exclusively uses the GPA address range of 0 GB to 5 GB, and the virtual machine 2 exclusively uses the GPA address range of 0 GB to 4 GB. Both the GPA address range of 0 GB to 5 GB and the GPA address range of 0 GB to 4 GB may correspond to different HPA address ranges in the physical memory, thereby implementing isolation between virtual machine memories.

The GPA address range is related to the specification of the virtual machine. For example, a tenant may set, on a cloud management platform, a virtual machine specification with a memory size of 5 GB for the virtual machine 1. In this case, the virtual machine manager is notified by the cloud management platform that the virtual machine 1 whose GPA is 0 GB to 5 GB needs to be created. The tenant may set, on the cloud management platform, a virtual machine specification with a memory size of 4 GB for the virtual machine 2. In this case, the virtual machine manager is notified by the cloud management platform that the virtual machine 2 whose GPA is 0 GB to 4 GB needs to be created.

Currently, in a cloud scenario, in a case in which an external device is passed through to the virtual machine for use, the hypervisor needs to allocate memory to the virtual machine at a time, and pin (pin) a memory block allocated to the virtual machine, so that the virtual machine needs to initialize preoccupied memory before being started, to ensure that the memory block allocated to the virtual machine cannot be used by another memory user in a life cycle of the virtual machine. In addition, the hypervisor allocates GPA space to the virtual machine, and establishes correspondences between a plurality of GPAs in the GPA space and an HPA of the memory block allocated to the virtual machine. The correspondence between the GPA and HPA is maintained by the host operating system.

A pass-through technology is a virtualization technology supported by the external device (for example, a PCIe device) of the server. Pass-through refers to that the hypervisor is bypassed and the external device is directly provided for the virtual machine to use. The pass-through technology allows an external device to set a plurality of virtual functions (virtual function, VF). The external device sets storage resources or network resources in one or more VFs and provides the one or more VFs for a virtual machine of a tenant. The virtual machine can directly use resources provided by the one or more VFs. For example, the external device binds, to a VF, a 40 GB logical disk obtained by dividing a storage resource, and provides the VF for the virtual machine 1. After the VF is mounted to the virtual machine 1, the virtual machine 1 may access the logical disk in the same manner as accessing a local disk. Alternatively, the external device binds a network interface card interface eth0 in the network resource to a VF, and provides the VF for the virtual machine 1. After the VF is mounted to the virtual machine 1, the virtual machine 1 may use eth0 in a same manner as using a local network interface card.

Generally, the operating system of the virtual machine running on the virtual machine does not know the HPA of the memory block allocated by the hypervisor to the virtual machine, but the operating system of the virtual machine knows the GPA space allocated to the virtual machine. When the virtual machine accesses, via the external device that is passed through to the virtual machine for use, the memory block allocated to the virtual machine, the virtual machine sends a DMA request to the host operating system, where the DMA request carries a GPA that needs to be accessed. After receiving the DMA request, the host operating system queries, based on the GPA carried in the DMA request, a correspondence between the GPA and an HPA, to obtain the HPA corresponding to the GPA that the virtual machine requests to access, reads data recorded in a memory block indicated by the HPA, and then provides the data for the virtual machine. A process in which the host operating system obtains the corresponding HPA based on the GPA is referred to as an address translation process or an address remapping process. The process is to translate the GPA in the DMA request into the host physical address (namely, the HPA) that can be used by the external device, and is a process of managing the memory. A device configured to perform the address remapping process is referred to as a remapping device (remapping hardware). Currently, remapping devices generally include input/output memory management units (input/output memory management unit, IOMMU) and system memory management units (system memory management unit, SMMU). The IOMMU and SMMU are disposed in the host. The IOMMU and SMMU record a correspondence between the GPA and the HPA through a translation lookaside buffer (translation lookaside buffer, TLB). A quantity of page table entries (page table entry, PTE) of the TLB is usually fixed, that is, a quantity of correspondences between GPAs and HPAs that can be recorded by the IOMMU and the SMMU is specified to be fixed. The PTE includes a valid bit and an n-bit address field, and the address field records an HPA corresponding to a GPA, that is, a start location of a memory page corresponding to the GPA.

As a quantity of external devices gradually increase, a quantity of correspondences between GPAs and HPAs that must be recorded by the IOMMU and the SMMU increases accordingly. However, because the IOMMU and the SMMU can record only a fixed quantity of correspondences between the GPAs and the HPAs, some correspondences may not be recorded. Consequently, when address translation relies on an unrecorded correspondence between the GPA and the HPA, address translation cannot be implemented, leading to degraded address translation performance of the IOMMU and the SMMU, and in turn, reduced operational performance of the external device. For example, in a current cloud scenario, the quantity of external devices of the host continuously increase, and quantities of resources and DMA operations of the external devices continuously increase. However, the IOMMU and the SMMU can record only a small quantity of correspondences between the GPAs and the HPAs, which causes deterioration of address translation performance of the IOMMU/SMMU. The IOMMU is used as an example. Currently, an x86 IOMMU TLB has only 64 page table entries. In a large-scale virtual function (virtual function, VF) scenario of a cloud, the IOMMU TLB needs to record more than 64 page table entries. As a result, correspondences between a part of GPAs and HPAs are not recorded. When the HPAs corresponding to the part of GPAs need to be queried, address translation performance is affected. For example, when a quantity of VFs exceeds 64, a severe TLB page fault occurs. When the quantity of VFs is 128, address translation performance decreases by about 40%.

Currently, the address translation function does not support page fault processing. In this case, the external device passed through to the virtual machine needs to preoccupy memory. Because the memory preoccupied by the external device is in a pinned state, the preoccupied memory cannot be used by another memory user. As a result, memory usage is low. For example, in the current cloud scenario, when the external device is passed through to the virtual machine, the hypervisor needs to successfully allocate memory at a time and pin the allocated memory on the host. The allocated memory cannot be reused, resulting in low overall memory usage. In addition, the virtual machine needs to initialize the preoccupied memory before being started, which causes slow virtual machine startup.

Although, a virtual IOMMU (coIOMMU) technology is proposed. However, this technology can be implemented only after the operating system of the virtual machine is modified. As a result, it is difficult to implement the technology in the public cloud.

In view of this, this application provides a public cloud technology-based server system and an access method thereof. The server system includes a server and an external device inserted into the server. A connection channel is established between the server and the external device. The server is provided with a virtual machine and a virtual machine manager. The virtual machine manager is configured to provide virtual hardware for the virtual machine. Virtual hardware includes virtual an external device and a virtual memory. The virtual external device is obtained by device emulation based on the external device. The virtual memory is obtained by device emulation based on a memory configured for the external device. The virtual machine is provided with a virtual device driver for the virtual external device. The virtual device driver is configured to send an access request to the external device when the virtual external device accesses a target guest physical address of the virtual memory. The access request carries the target guest physical address. The external device is configured to: query, based on the access request, a first correspondence between a guest physical address and a host physical address to obtain a target host physical address corresponding to the target guest physical address; obtain target data recorded at the target host physical address; and send the target data to the virtual device driver.

It can be learned from the foregoing that, it is equivalent to that the server system offloads an address translation function to the external device, so that the external device directly manages memory allocated to the virtual machine, and shares a task of performing address translation on a target guest physical address in an access request. In this way, an address translation device like an IOMMU/SMMU in the server does not need to execute the address translation task, and a TLB of the address translation device like the IOMMU/SMMU in the server does not need to record a correspondence of a target guest physical address accessed by the virtual external device of the external device, thereby reducing a quantity of correspondences that must be recorded in the TLB, and alleviating a conflict between a small quantity of page table entries of the TLB and an excessive quantity of external devices. This reduces a probability of a TLB page fault in an address translation process, effectively improves the address translation performance of the server system, thereby improving operational performance (for example, DMA performance) of the external devices and increasing the efficiency in memory management.

It should be noted that, although an example in which the virtual machine uses the external device is used for description in this application, another type of virtual instance uses the external device. This is not specifically limited in embodiments of this application. The another type of virtual instance is, for example, a container. When another type of virtual instance uses the external device, for an implementation in which the another type of virtual instance accesses the memory via the external device, refer to the implementation in which the virtual machine accesses the memory via the external device in this embodiment of this application. Details are not described in this specification again.

This specification describes the technical solutions of this application in detail from a plurality of perspectives such as an implementation scenario, a method procedure, a hardware apparatus, and a software apparatus.

The following first describes implementation scenarios of embodiments of this application by using examples.

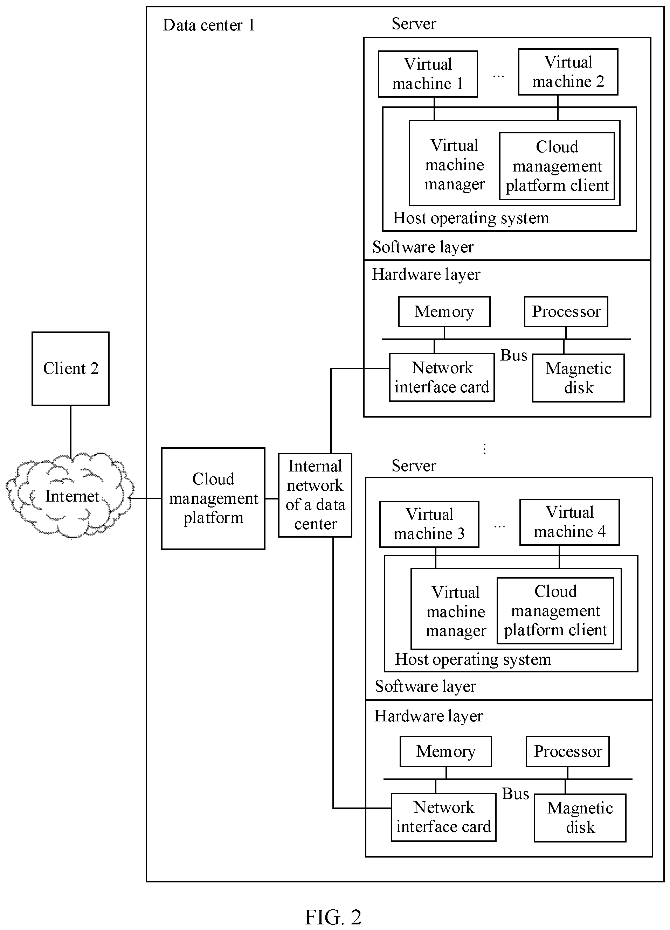

FIG. 2 is a diagram of a structure of an implementation scenario in this application according to an embodiment of this application. As shown in FIG. 2, the implementation scenario includes a data center 1 and a client 2. A communication connection can be established between the data center 1 and the client 2 through a network. Optionally, the network may be the internet, or may be another network. This is not limited in this embodiment of this application. The tenant can interact with the data center 1 via the client 2. For example, the tenant may send information such as a virtual instance creation request to the data center 1 via the client 2. The data center 1 is configured to respond based on the information sent by the client 2.

A large quantity of infrastructures owned by a cloud service provider are deployed in the data center 1, for example, a compute resource, a storage resource, and a network resource. For example, the compute resource may be a compute device that can provide a computing capability, for example, a server and an external device that has a computing capability, like a GPU, an IPU, and a DPU. The storage resource may be a device that can provide a storage capability, for example, an external device like a hard disk drive, a magnetic disk, or a graphics card. The network resource may be a device that can provide a network transmission capability, for example, an external device like a network interface card. As shown in FIG. 2, the data center 1 includes a cloud management platform and an infrastructure (not shown in FIG. 2). The cloud management platform and infrastructure are connected through an internal network of the data center. The cloud management platform is used to manage the infrastructure. The infrastructure is used to provide a public cloud service. The infrastructure includes a plurality of servers. Cloud services can be deployed on servers. A tenant can send a cloud service request to the server via the client 2 used by the tenant, and the server can process the cloud service request, and provide a cloud service based on the processed cloud service request.

The cloud management platform can be logically divided into: a tenant console, a compute management service, a network management service, a storage management service, an authentication service, and an image management service. The tenant console provides an interface or an application programming interface (application programming interface, API) to interact with the tenant. The compute management service is used to manage a server running a virtual instance and a bare metal server. The network management service is used to manage a network service (for example, a gateway and a firewall). The storage management service is used to manage a storage service (for example, a data bucket service). The authentication service is used to manage an account and a password of the tenant. The image management service is used to manage an image of a virtual instance.

In the implementation scenario shown in FIG. 2, one data center is provided with a plurality of servers. The server includes a hardware layer and a software layer. The hardware layer is a common configuration of the server. Hardware devices such as a processor, a memory, a network interface card, a magnetic disk, and a bus are deployed at the hardware layer. The software layer includes an operating system installed and running in the server. An operating system relative to a virtual machine may be referred to as a host operating system. A virtual machine manager (also referred to as a hypervisor) runs in the host operating system. The virtual machine manager implements compute virtualization, network virtualization, and storage virtualization for a virtual machine, and manages the virtual machine.

A cloud management platform client runs in the virtual machine manager. The cloud management platform client can receive a control plane command sent by the cloud management platform, create a virtual instance on the server according to the control plane control command, and perform full life cycle management on the virtual instance. For example, the cloud management platform client can detect, in real time, a usage status of a hardware resource of a server on which the cloud management platform client is located, and report the usage status to the cloud management platform. When determining to create a virtual instance on a server, the cloud management platform sends a virtual instance creation command to a cloud management platform client on the server. After receiving the command, the cloud management platform client creates the virtual instance on the server. In this way, the tenant can create, manage, log in to, and operate the virtual instance in the data center on the cloud management platform.

Servers may be configured to run virtual machines of different specifications. Virtual machine specifications are classified into a general-purpose compute type, a memory-optimized type, an ultra-large memory type, and the like. Each type has a specific specification. After the tenant selects a virtual machine specification, the cloud management platform selects a server that supports the specification in the data center, determines that the server has sufficient idle hardware resources, and creates a virtual machine set with the specification on the server. The cloud management platform can be used to configure a server to analyze and plan a server hardware resource. Based on hardware performance of servers, compute products corresponding to physical hardware can be planned, for example, virtual machines of different specifications can be planned to meet differentiated requirements of different tenants. In addition, differentiated pricing policies can be used based on performance differences of virtual machines with different specifications. For example, a virtual instance with a high-performance specification is sold at a high price, and a virtual instance with a common-performance specification is sold at a low price, so that the tenants can purchase virtual instances on demand.

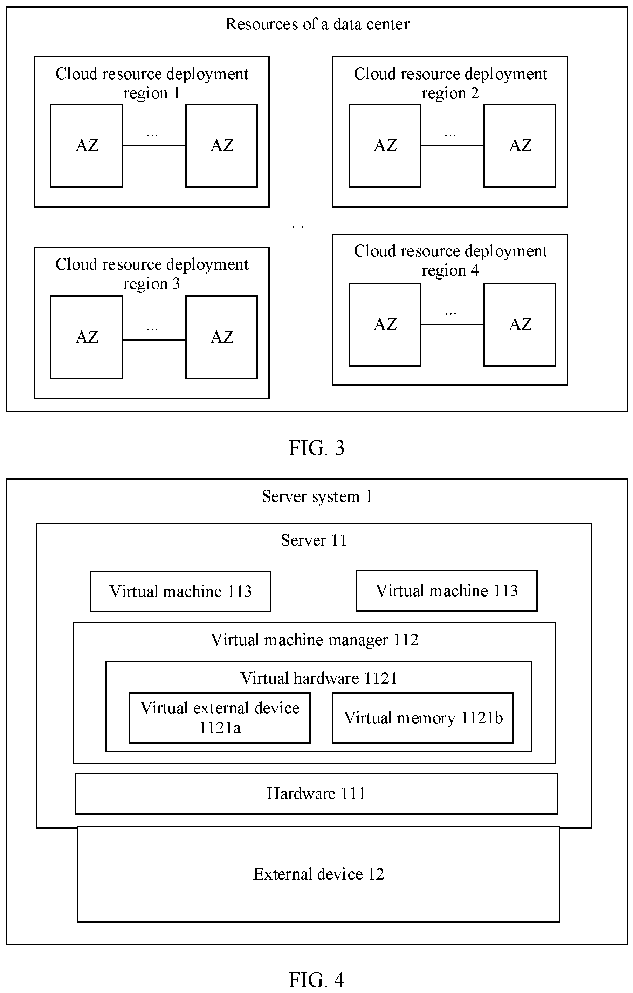

In an implementation, as shown in FIG. 3, a location of an infrastructure resource in the data center may be described based on a cloud resource deployment region (region) and an availability zone (availability zone, AZ). The tenant can deploy cloud services based on resources in a specified region and AZ. Regions are divided from a geographical location and a network latency dimension. A same resource pool is used in a same region, which can be considered as sharing public services such as elastic compute, block storage, object storage, a virtual private cloud (virtual private cloud, VPC) network, an elastic network internet protocol (elastic internet protocol, EIP) address, and an image. Regions are classified into general regions and dedicated regions. The general region refers to a region that provides a general cloud service to a public tenant. The dedicated region is a region that carries a same type of services or provides a service for a specific tenant. A region usually includes a plurality of AZs. A plurality of AZs in a region are connected through high-speed optical fibers, to satisfy a requirement of the tenant for constructing a high availability system across AZs. One AZ is a set of one or more data centers shown in FIG. 3. Compute, network, and storage resources in an AZ are logically divided into a plurality of clusters.

The tenant may send an instruction to the cloud management platform via the client 2 used by the tenant, to create, manage, log in to, and operate the virtual instance in the server, and use a cloud service provided by the virtual instance. For example, the cloud management platform can provide an access interface. The access interface can be provided in a form of an interface or API. The tenant can operate the client to remotely access the access interface to register a cloud account and password on the cloud management platform and use the cloud account and password to log in to the cloud management platform. The cloud management platform can also authenticate the cloud account and password. After the authentication succeeds, the tenant can select and pay for a virtual instance with a specific specification (a processor, a memory, and a magnetic disk) on the cloud management platform. After the tenant successfully purchases the virtual instance, the cloud management platform provides a remote login account and password of the virtual instance by the tenant. The tenant may remotely log in to the virtual instance on the client by using the remote login account and password, and install and run an application of the tenant in the virtual instance, to implement a service of the tenant by using the application.

The client 2 may be a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, a smart wearable device, a smart vehicle-mounted device, an internet of things device, or the like.

In an implementation, the method for accessing the public cloud technology-based server system provided in this embodiment of this application may be implemented by running an executable program by a compute device in the data center 1. Optionally, the method for accessing the public cloud technology-based server system provided in this embodiment of this application may be optionally applied to a public cloud technology-based server system access system. The public cloud technology-based server system access system is deployed in a server managed by the cloud management platform. The public cloud technology-based server system access system can implement the method for accessing the public cloud technology-based server system provided in this embodiment of this application by running the executable program of the method for accessing the public cloud technology-based server system provided in this embodiment of this application. In addition, the executable program for implementing the method for accessing the public cloud technology-based server system is optionally presented in a form of an application installation package. After installing the application installation package, the server can implement the method for accessing the public cloud technology-based server system provided in this embodiment of this application by running an executable program in the application installation package.

It should be understood that the foregoing content is an example of an implementation scenario of the method for accessing the public cloud technology-based server system provided in embodiments of this application, and does not constitute a limitation on the implementation scenario of the method for accessing the public cloud technology-based server system. A person of ordinary skill in the art may learn that, as a service requirement changes, an implementation scenario of the method may be adjusted based on an application requirement, and is not enumerated in embodiments of this application.

The following describes an implementation of a public cloud technology-based server system provided in an embodiment of this application. FIG. 4 is a diagram of a structure of a server system according to an embodiment of this application. As shown in FIG. 4, the server system 1 includes a server 11 and an external device 12 inserted into the server. A connection channel is established between the server and the external device. For example, a mainboard of the server has a device slot, the external device has an interface matching the slot, the external device is inserted into the slot of the server through the interface, and the external device may be connected to the server through a bus or in another manner. Optionally, the external device in this application may be a GPU, an IPU, a DPU, a hard disk drive, a magnetic disk, a graphics card, a network interface card, or the like. In addition, the external device in this application may be another type of device other than the device described herein. Examples are not provided in this embodiment of this application.

The server has hardware 111. The server is provided with a virtual machine manager 112 and a virtual machine 113. The virtual machine manager is configured to provide virtual hardware 1121 for the virtual machine based on the hardware of the server and the external device of the server. The virtual hardware includes a virtual external device 1121a and a virtual memory 1121b. The virtual external device is obtained by the virtual machine manager by device emulation based on the external device. The virtual memory is obtained by the virtual machine manager by device emulation based on a memory configured for the external device. It should be understood that the virtual hardware provided by the virtual machine manager for the virtual machine includes virtual hardware of another type, for example, a virtual processor, to meet a performance requirement of the virtual machine. Examples are not provided herein. The virtual machine is provided with a virtual device driver for the virtual external device. The virtual device driver is configured to implement a process of accessing the virtual external device. The virtual device driver is configured to send an access request to the external device when the virtual external device accesses a target guest physical address of the virtual memory. The access request carries the target guest physical address. For example, an application is set in the virtual machine, and when a capability of the external device needs to be used in a running process of the application, in a case in which the external device is passed through to the virtual machine for use, the virtual external device accesses the virtual memory, to provide the capability of the external device for the application. An operation of accessing the virtual memory by the virtual external device triggers the access request. The virtual device driver can obtain the access request, and send the access request to the external device, so that the external device accesses the memory based on the access request, thereby implementing an objective of accessing the virtual memory by the virtual external device.

The memory in this application may be optionally a memory (namely, a local memory) configured in the server, a memory of another compute device that establishes a connection channel with the server, or the like. The memory of the another compute device that establishes the connection channel with the server is, for example, a memory that is deployed on the another compute device and that is shared by the another compute device with the server, namely, a shared memory. The server can access the memory of the another compute device through remote access or a high-speed communication bus. For example, the server accesses the memory of the another compute device by using a remote direct memory access (remote direct memory access, RDMA) technology. The high-speed communication bus may be a compute express link (compute express link, CXL) or a universal bus (also referred to as a UB bus).

After receiving the access request sent by the virtual device driver, the external device can query, based on the access request, a first correspondence between a guest physical address and a host physical address to obtain a target host physical address corresponding to the target guest physical address. Then, the external device obtains, from the memory, target data recorded at the target host physical address, and sends the target data to the virtual device driver. The virtual device driver may optionally send the access request to the external device based on a work queue (work queue, WQ). Correspondingly, the external device can obtain the access request from the work queue in a manner of obtaining a work queue element (work queue element, WQE) from the work queue, and then obtain, from the access request, an input/output virtual address (input/output virtual address, IOVA) carried in the access request, that is, obtain the target guest physical address.

An address translation function of the external device can be implemented by using software or hardware. When the function is implemented by using the software, an executable program for implementing the function needs to be configured in the external device. When the function is implemented by using the hardware, the hardware needs to be configured in the external device. The hardware may be referred to as a device memory management unit (device memory management unit, DMMU).

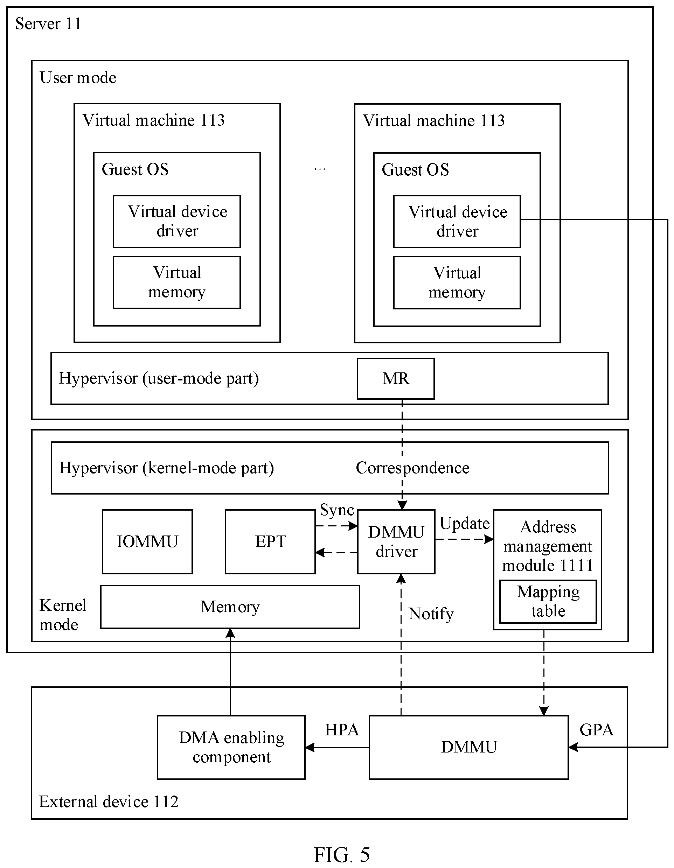

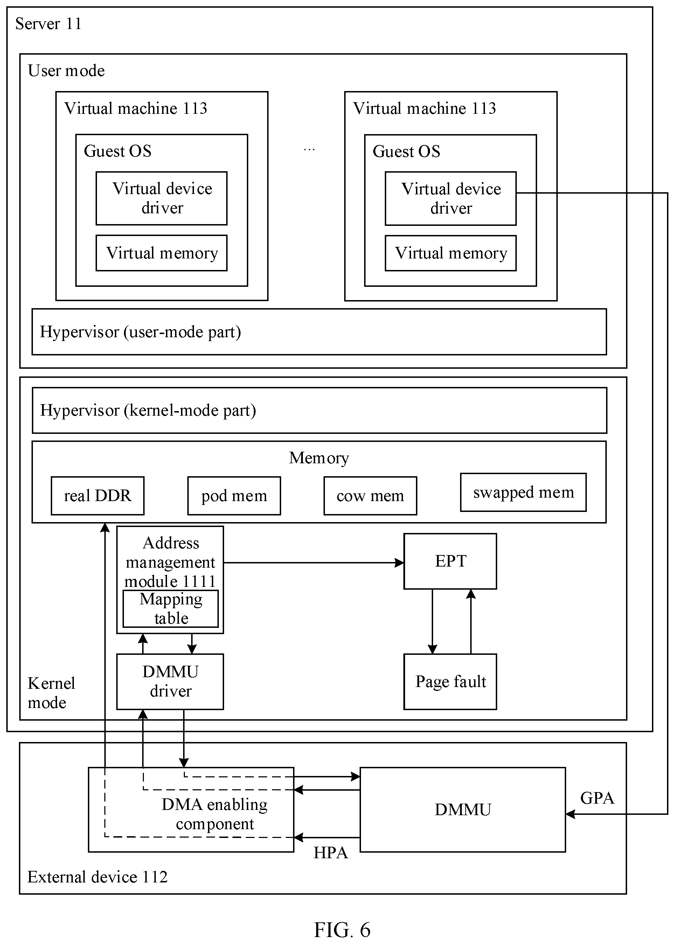

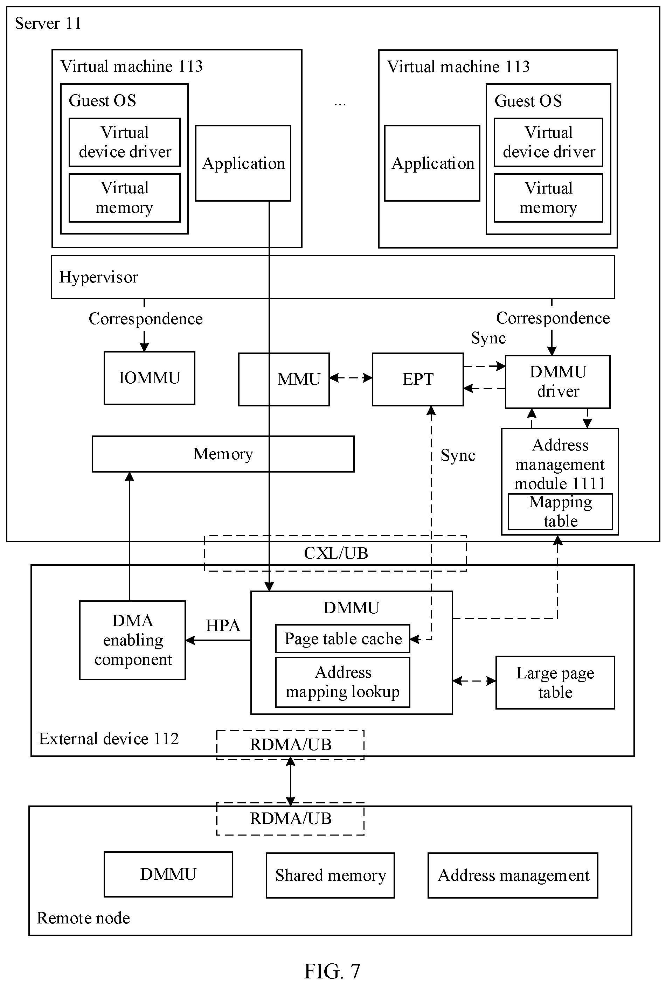

FIG. 5, FIG. 6, and FIG. 7 are several logical diagrams of a server system presented from different perspectives according to an embodiment of this application. As shown in FIG. 5, a server system may be logically divided into a server and an external device, and the server is further divided into a user mode and a kernel mode. In the user mode, a virtual machine is set, an operating system of the virtual machine runs in the virtual machine, and the operating system manages a virtual external device (not shown in the figure), a virtual device driver, and a virtual memory. In the kernel mode, a memory and a device driver of a DMMU DMMU driver are managed, and a mapping table (mapping table) recording a first correspondence is stored in the kernel mode. The memory in FIG. 5 is a local memory of the server. A hypervisor includes a user-mode part and a kernel-mode part. A DMMU and a DMA enabling component (combo DMA) are disposed in the external device. After the virtual external device triggers the access request, the virtual device driver obtains the access request, and sends the access request to the DMMU. After receiving the access request, the DMMU queries the mapping table based on a GPA carried in the access request, and after finding an HPA corresponding to the GPA, provides the HPA for the DMA enabling component. The DMA enabling component reads, based on the HPA, data recorded in a memory block indicated by the HPA, and provides the data for the virtual machine. FIG. 6 is different from FIG. 5 in that the memory has a plurality of implementation forms. Based on functions of the memory, the memory may include a plurality of parts. For example, as shown in FIG. 6, the memory includes actually allocated memory, page-on-demand memory (page-on-demand, POD mem), copy-on-write memory (copy-on-write memory, COW mem), and swapped memory (swapped memory, swapped mem). When the memory is a double data rate synchronous dynamic random access memory (double data rate synchronous dynamic random access memory, DDR SDRAM), the actually allocated memory is also referred to as a real DDR. Different from that in FIG. 5, the memory in FIG. 7 is a shared memory deployed on another server (for example, a remote node in FIG. 7). After the DMA enabling component obtains the HPA, if the memory block indicated by the HPA is a memory block of the shared memory, the DMA enabling component accesses the shared memory in an RDMA manner or through a high-speed communication bus, to read the data recorded in the memory block indicated by the HPA. After the DMA enabling component obtains the HPA, if the memory block indicated by the HPA is a memory block of the shared memory, the DMA enabling component accesses the shared memory through a high-speed communication bus, to read the data recorded in the memory block indicated by the HPA. In addition, in FIG. 7, a connection channel is established between the server and the external device through a CXL/UB, and mutual access to the shared memory is implemented between the external device and the remote node through the RDMA/UB. In addition, FIG. 7 shows a process of providing a GPA for a DMMU after an application set in a virtual machine initiates access. The DMMU is configured with a page table cache (cache) and an address mapping lookup component. The address mapping lookup component is used to query a correspondence based on a GPA. The page table cache is configured to store a correspondence that is frequently used in an EPT. When performing address translation, the address mapping lookup component may first search the page table cache for the correspondence, and when the correspondence cannot be found in the page table cache, query an address management module or the EPT. When a target HPA corresponding to a target GPA can be found in the page table cache, address translation can be further accelerated. In FIG. 7, a large page table is further configured, and the large memory table is used to manage a memory configured for an external device.

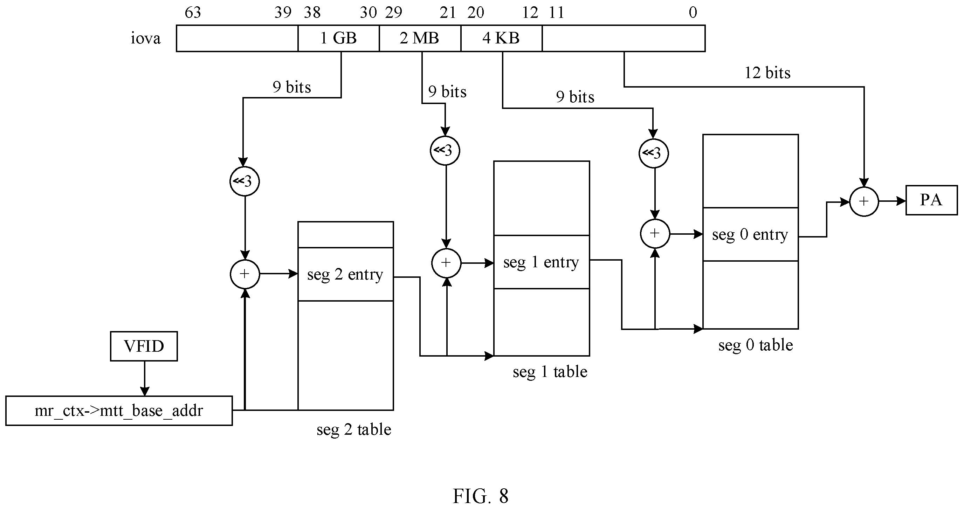

In a possible implementation, when providing a virtual external device for a virtual machine, a virtual machine manager may optionally provide a resource for the virtual machine in a form of a VF. Different VFs are distinguished based on VF identifiers (namely, VFIDs). In addition, the memory allocated to the external device is also distinguished based on a VF, and the first correspondence may be managed at a granularity of the VF. For example, when the first correspondence is stored in a page table manner, each page table is used to record a correspondence between a guest physical address and a host physical address that belong to one VF. The correspondence between the guest physical address and the host physical address that belong to the VF is used to record a correspondence between a guest physical address in guest physical address space allocated to the VF and a host physical address in physical memory space allocated to the VF. When the virtual machine manager provides a resource to the virtual machine in the form of the VF, if the virtual machine accesses the resource provided in the form of the VF, an access request received by the external device carries a VFID. After receiving the access request, the external device can obtain the VFID based on the access request. Then, as shown in FIG. 8, the external device can find, based on the VFID, a memory request context (memory request context, MR context) of a VF indicated by the VFID from configuration space of the external device, and then find, from the memory request context, a base address of a page table that records a correspondence between the guest physical address and the host physical address that belong to the VF, namely, mr_ctx->mtt_base_addr in FIG. 8. Then, the external device queries, based on a target guest physical address carried in the access request, a page table indicated by the base address to obtain a target host physical address corresponding to the target guest physical address. A process in which the external device queries the page table based on the target guest physical address is a step-by-step search process.

As shown in FIG. 8, iova carried in the access request includes a plurality of address segments, and each address segment is represented by an address field of a binary number of specified bits. The target guest physical address shown in FIG. 8 includes four address segments, which are respectively: a 0^{th} address segment represented by binary bits 0 to 11, a 1^{st} address segment represented by binary bits 12 to 20, a 2^{nd} address segment represented by binary bits 21 to 29, and a 3^{rd} address segment represented by binary bits 30 to 38. After obtaining the base address of the page table, the external device can query a 2^{nd}-segment page table (for example, the seg 2 table in FIG. 8) based on the base address. Then, based on an address indicated by the 3^{rd} address segment, a base address of a 1^{st}-segment page table (for example, the seg 1 table in FIG. 8) is found in the second-segment page table. Then, in the first-segment page table indicated by the base address of the first-segment page table, query is performed based on an address indicated by the 2^{nd} address segment, to obtain a base address of a 0^{th}-segment page table (for example, the seg 0 table in FIG. 8). Then, in the 0^{th}-segment page table indicated by the base address of the 0^{th}-segment page table, query is performed based on the address indicated by the 1^{st} address segment, to obtain an offset, in the 0^{th}-segment page table, of a page table entry that records the correspondence between the target guest physical address and the target host physical address, and then obtain the target host physical address (namely, the PA in FIG. 8) by querying the page table entry based on the address indicated by the 0^{th} address segment. It should be noted that information such as a quantity of bits of an address field in FIG. 8 is merely an example, and may be changed based on an application requirement.

A process in which the external device obtains, based on the access request, the target host physical address corresponding to the target guest physical address may be optionally implemented by using microcode set in the external device, or may be implemented by using a hardware engine disposed in the external device. This is not specifically limited in this embodiment of this application.

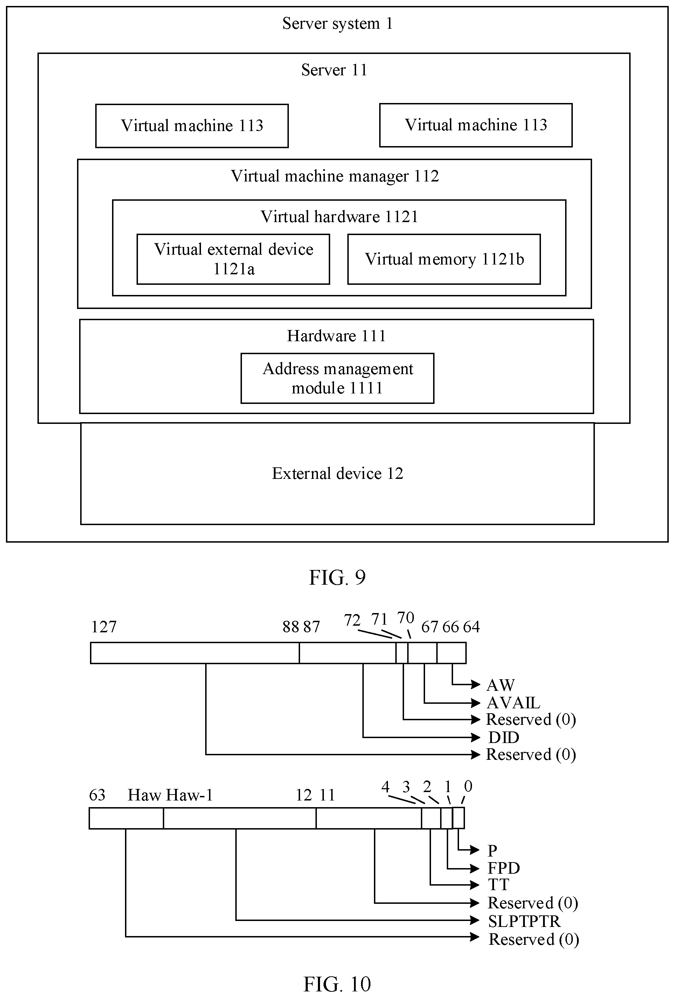

In a possible implementation, as shown in FIG. 9, the server is further provided with an address management module 1111. The correspondence between the host physical address of the memory block in the memory and the guest physical address in the guest physical address space may be stored in the address management module. That is, the mapping tables in FIG. 5, FIG. 6, and FIG. 7 are stored in the address management module. Correspondingly, the address management module may be optionally deployed in the kernel mode of the server. FIG. 9 is a diagram of the address management module disposed in the hardware 111.

In this case, the virtual machine manager is configured to provide the correspondence between the host physical address and the guest physical address for the address management module. The virtual machine manager can allocate a memory block to the virtual machine from the memory based on a specification of the virtual machine, perform device emulation for the virtual machine based on the memory block allocated to the virtual machine to obtain the virtual memory, configure guest physical address space of the virtual memory, then establish the correspondence between the host physical address of the memory block in the memory and the guest physical address in the guest physical address space, and provide the correspondence for the address management module. For example, as shown in FIG. 5, FIG. 6, and FIG. 7, the hypervisor can provide MR information for the address management module. The MR information carries the correspondence between the host physical address of the memory block in the memory and the guest physical address in the guest physical address space. In addition, the correspondence further carries an identifier of a virtual machine (VMID) to which the correspondence belongs, to identify the virtual machine to which the correspondence belongs, so that a corresponding virtual machine can be found based on the identifier when a page fault occurs. Before obtaining the virtual memory through emulation for the virtual machine, the virtual machine manager needs to first determine, based on the specification of the virtual machine, the memory block allocated to the virtual machine for use, and then perform device emulation based on the memory block allocated to the virtual machine for use to obtain the virtual memory. Therefore, the virtual machine manager can obtain the host physical address of the memory block corresponding to the guest physical address in the guest physical address space, and establish the correspondence between the host physical address and the guest physical address based on the host physical address. Optionally, a DMMU driver is disposed in a kernel of the server. In this case, the virtual machine manager may send the MR information to the address management module via the DMMU driver.

In this application, the server may be compatible with an original address translation function. For example, as shown in FIG. 5 and FIG. 7, the server is further provided with an MMU and an IOMMU. The IOMMU is configured to receive an access request sent by the virtual machine, obtain, based on a GPA carried in the access request, an HPA corresponding to the GPA, read data from the HPA, and provide the read data for the virtual machine. A correspondence used by the IOMMU is also provided by the hypervisor. When the server is compatible with the original address translation function, some modifications need to be made in the server, so that the access request using a capability of the external device can be processed by the external device, instead of being processed by the original address translation function of the server, that is, the original address translation function of the server is bypassed (bypassed). In a possible implementation, the function may be implemented by setting configuration space of the external device and/or setting the access request. For example, it may be set that configuration information of the external device indicates that the access request is sent to the external device in a straight-through manner, and the access request indicates that an address carried in the access request is a host physical address obtained through translation. In this way, when the virtual external device accesses the target guest physical address of the virtual memory, the virtual device driver can send the access request to the external device, and does not send the access request to an original remapping device of the server, so that the original remapping device of the server can be bypassed. The following describes an implementation of setting the configuration information and the access request by using an example in which the original remapping device of the server is an IOMMU. When the remapping device is another type of remapping device, for an implementation of setting the configuration information and the access request, refer to the implementation. Details are not described herein again.

In a possible implementation, configuration is performed, so that the original remapping device of the server considers the access request as a translated request. In this way, the original remapping device of the server does not translate the target guest physical address carried in the access request, so that the access request is sent to the external device as the translated request, and the external device processes the access request. The translated request indicates that the address carried in the request is the host physical address. To achieve this objective, in one aspect, the external device needs to support the translated request, that is, the external device can translate the target guest physical address carried in the request that is considered by the original remapping device of the server as being translated. In another aspect, it needs to be ensured that a type of the access request is a translated request.

If a current status of the external device supports the translated request, the external device does not need to be configured. If the current status of the external device does not support the translated request but the external device has a capability of supporting the translated request, the external device needs to be configured, so that the current status of the external device supports the translated request. In a possible implementation, because a context entry (context entry) in the configuration space of the external device usually records IOMMU page table information of the external device, the IOMMU page table information can indicate a capability of the external device for supporting a translated request, a request that is not translated, and an untranslated request. As shown in FIG. 10, the context entry uses 128 bits to represent a plurality of fields, and the plurality of fields respectively indicate different information. A TT field represented by a 3^{rd} bit and a 2^{nd} bit indicates the capability of the external device for supporting the translated request, the request that is not translated, and the untranslated request. Table 1 shows support statuses of the external device for the translated request, the request that is not translated, and the untranslated request when the TT field is assigned with different values. According to Table 1, when a value of the TT field is "01", the current status of the external device supports the translated request (Translated request). Therefore, if the original remapping device of the server needs to be bypassed, the value of the TT field may be optionally changed to "01", so that the current status of the external device supports the translated request. The untranslated request (Untranslated request) indicates that the request is a request that does not require translation. For example, when the access request carries the host physical address, the access request may be considered as an untranslated request, and the access request does not require translation. Therefore, there is no case of whether the address is translated or not translated. A translated request (Translated request) indicates that the address carried in the request is a translated address. A translation request (Translation Request) indicates that an address carried in the request needs to be translated. If the external device does not have the capability of supporting the translated request, at least the following two solutions can be used to avoid the limitation of the kernel: In a first implementation, the kernel is directly modified, and the TT field is set to "01b", so that the IOMMU considers that the external device supports the translated request. In a second implementation, the external device reports, to the server, that the external device has the capability of supporting the translated request, even if the external device does not really support the translated request. In addition, because the device does not initiate a translation request, an exception caused by unauthorized access does not occur.

**Table 1**

| Bit (Bit) | Field (Field) | Description (Description) |
|---|---|---|
| 3:2 | Translation (Translation, TT) | 00b: An untranslated request is translated using a level-2 page table structure pointed by an SLPTPTR. Translated requests and translation requests are blocked. |
| | | 01b: Untranslated, translated, and translation requests are all supported. |
| | | 10b: Untranslated requests are not translated but are passed through and an SLPTPTR field is ignored by hardware. |
| | | Translated and translation requests are blocked. |
| | | 11b: Reserved (reserved) |

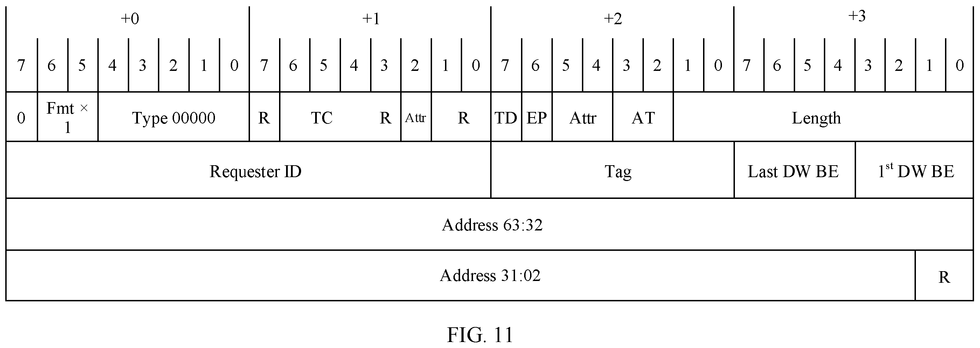

It can be learned from the foregoing that, to bypass the original remapping device of the server, the type of the access request needs to be ensured to be the translated request. Therefore, to cooperate with implementation of the function, the type of the access request further needs to be set in this application. The type of the access request may be set by setting a field in a transaction layer packet (transaction layer packet, TLP) header of the access request. A TLP header format of a PCIe request is shown in FIG. 11, where an AT field is used to specify an address type, that is, indicates whether the address in the access request needs to be translated. Table 2 shows whether the address in the access request needs to be translated when the AT field is assigned with different values. It can be learned from Table 2 that, in this application, the AT field may be set to 10, to indicate that the address carried in the access request is an address that does not need to be translated, to bypass the remapping device. This case is equivalent to that, from the perspective of the IOMMU, the access request sent by the virtual device driver is a translated request, the GPA carried in the access request is a translated address, and the access request may be considered as a request that does not need to be translated.

**Table 2**

| AT field | Operation type |
|---|---|
| 0b00 | An address carried in a TLP is not translated, and needs to be translated. |
| 0b01 | The TLP is a translation request (Translation Request). |
| | The address carried in the TLP is an address that needs to be translated and a length of the translation. |
| 0b10 | The address carried in the TLP is a translated request, and the address can be directly used to access memory content. |

When querying the first correspondence based on the target guest physical address, the external device may find the target host physical address corresponding to the target guest physical address (that is, hit), or may not find the target host physical address corresponding to the target guest physical address (that is, miss). For example, when the address management module does not record the correspondence between the target guest physical address and the corresponding target host physical address, when querying the first correspondence based on the target guest physical address, the external device cannot find the target host physical address corresponding to the target guest physical address. In this case, some processing needs to be performed for this case, so that the corresponding target host physical address can be found based on the target guest physical address. When the correspondence is recorded in the page table, and the external device cannot find, in the page table, the target host physical address corresponding to the target guest physical address, it may be referred to as that a page fault occurs. In this case, the foregoing processing performed on the page fault is also referred to as page fault processing.

In a possible implementation, the external device is further configured to: when the first correspondence does not record the target host physical address corresponding to the target guest physical address, send a message indicating a matching failure to the address management module. The message carries the target guest physical address. The address management module is configured to forward the message to the virtual machine manager after receiving the message. The virtual machine manager is configured to: reallocate a memory block in the memory for the target guest physical address based on the message, establish a second correspondence between a host physical address of the reallocated memory block and the target guest physical address, and send the second correspondence to the address management module. The address management module is configured to update the first correspondence based on the second correspondence after receiving the second correspondence. In a process of obtaining the second correspondence, the virtual machine manager may need to perform page filling, for example, fill a correspondence between a missed guest physical address and a corresponding host physical address in a page table. For an implementation process of determining the correspondence between the missed guest physical address and the corresponding host physical address, refer to the implementation process of obtaining the first correspondence. Details are not described herein again. When an extended page table (extended page table, EPT) is set in the kernel of the server, when processing is performed for a miss case, a processing result may be further optionally synchronized to the EPT.

As shown in FIG. 5, the address management module is deployed in the kernel of the server, and the EPT is deployed in the kernel of the server. A DMMU is deployed in the external device, and the DMMU queries the correspondence based on the target guest physical address. When the query based on the target guest physical address misses, the server system performs page fault processing based on the page fault, and synchronizes a processing result to the EPT. In the page fault processing process, the DMMU sends, to the address management module, a notification message indicating a matching failure. The message carries the target guest physical address. After receiving the message, the address management module forwards the message to the hypervisor. The hypervisor reallocates a memory block in the memory for the target guest physical address based on the message, establish a second correspondence between a host physical address of the reallocated memory block and the target guest physical address, and send the second correspondence to the address management module. The address management module updates the first correspondence based on the second correspondence. A DMMU driver (DMMU driver) is disposed in the kernel of the server. A DMMU sends, to the address management module via the DMMU driver, the message indicating the matching failure. The hypervisor sends the second correspondence to the address management module via the DMMU driver. The address management module forwards the message to the hypervisor via the DMMU driver. A difference between the implementation shown in FIG. 6 and the implementation shown in FIG. 5 lies in that in the implementation shown in FIG. 6, when a miss occurs in the DMMU, the DMMU sends, to the address management module via the DMA enabling component and the DMMU driver, the message indicating the matching failure, and synchronizes a processing result to the EPT. The EPT performs a swap-in and swap-out process based on a page fault status. The page fault processing process in FIG. 7 is basically the same as the process in FIG. 5. Details are not described herein again.

It should be noted that, when the second correspondence is updated based on the first correspondence, draining of tasks that use the first correspondence needs to be considered. That is, if a task that is using the first correspondence is being executed, the operation of updating the second correspondence based on the first correspondence is not performed, and after the task that is using the first correspondence is completed, the operation of updating the second correspondence based on the first correspondence is performed. In this way, it can be ensured that the task that is using the first correspondence can be correctly executed, to improve reliability of an update process.

It can be learned from the foregoing that the server system provided in this application can perform related processing, for example, perform page fault processing, when querying a correspondence based on the target guest physical address results in a miss, to resolve the miss problem. In this way, memory pinning can be avoided before the virtual machine is started, and global memory locking can be released. In cloud scenarios, when the external device is passed through to the virtual machine, memory pinning can be avoided, so that overcommitment and reuse of the virtual machine memory can be implemented without user awareness (without imposing special requirements on the virtual machine system). This improves overall memory usage of the server and ensures that performance of the server does not deteriorate. This feature is especially obvious in scenarios with high memory pressure. In addition, because memory pinning is avoided, there is no need to configure a large amount of memory in a cloud scenario because of pre-allocation of the memory by the virtual machine, so that memory usage costs in the cloud scenario can be reduced, a problem that a memory cost of a public cloud gradually increases can be resolved, and market competitiveness of the public cloud is enhanced.

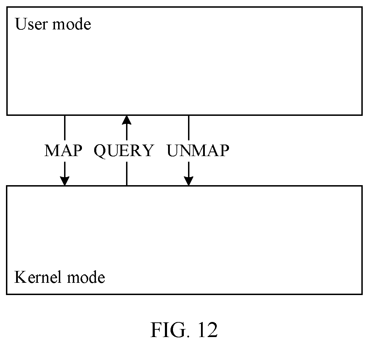

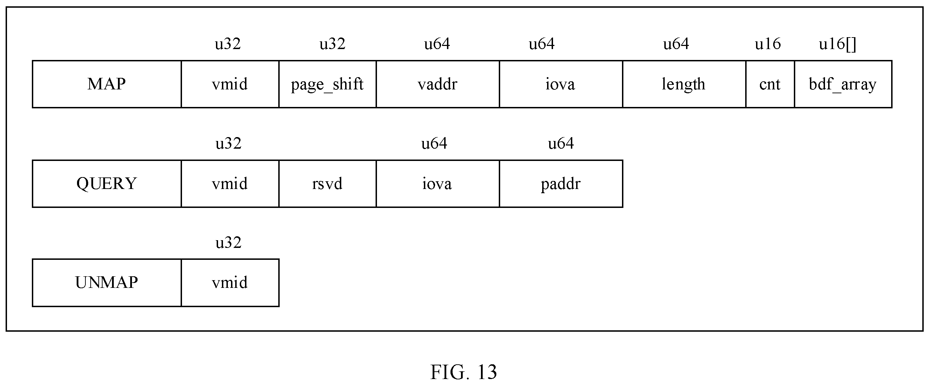

In this application, interaction between the user mode and the kernel mode may be optionally implemented according to a command. The kernel mode can interact with the external device by running the command. As shown in FIG. 12, interaction is performed between a user mode and a kernel mode according to an ioctl command, and interaction is performed between the kernel mode and an external device based on a command queue (command queue, Cmdq). For example, detection of an HPA address can be implemented between the user mode and kernel mode according to the ioctl command. If an event like a page fault or table modification occurs during service running, the kernel mode needs to interact with the external device based on cmdq. The ioctl command mainly includes a mapping command, an unmapping command, and a query command. As shown in FIG. 12 and FIG. 13, the mapping command of a DMMU is DMMU_CMD_MAP (MAP for short), and is used to map all address space of a virtual machine as a memory region (memory region). When the page table is managed at a granularity of a virtual machine, DMMU_CMD_MAP carries a vmid field. The vmid field indicates a virtual machine to which a guest physical address recorded in a page table belongs. It should be noted that the page table may also be managed at another granularity. When the page table is managed at another granularity, DMMU_CMD_MAP carries a field indicating a granularity body to which the guest physical address recorded in the page table belongs. A page_shift field in DMMU_CMD_MAP indicates a page offset, and indicates a size of a page used to record a correspondence between a guest physical address and a host physical address. A vaddr field in DMMU_CMD_MAP indicates a virtual address of a memory region in which mapping is performed. An iova field in DMMU_CMD_MAP indicates a start address for device access after mapping, that is, a start address of a GPA in this scenario, and is usually 0. A length field in DMMU_CMD_MAP indicates a length of a memory region based on a byte table. A cnt field in DMMU_CMD_MAP indicates a total quantity of correspondences in the page table. A bdf_array field in DMMU_CMD_MAP indicates a device that performs an address translation operation. The unmapping command of the DMMU is DMMU_CMD_UNMAP (UNMAP for short), and is used to unmap the correspondence between the guest physical address and the host physical address in the virtual machine. The query command of the DMMU is DMMU_CMD_QUERY (QUERY for short), and instructs to translate a guest physical address carried in the command, and return a translation result to a user-mode program. A paddr field in DMMU_CMD_QUERY indicates a physical address to which the mapping corresponds. An rsvd field in DMMU_CMD_MAP is a reserved bit. For content indicated by fields in DMMU_CMD_UNMAP and DMMU_CMD_QUERY that are the same as those in DMMU_CMD_MAP, see the descriptions of the corresponding fields in DMMU_CMD_MAP. In FIG. 13, u32, u64, and u16 above fields indicate lengths occupied by the fields below. For example, u16 indicates that a field below occupies 16 bits (bits).

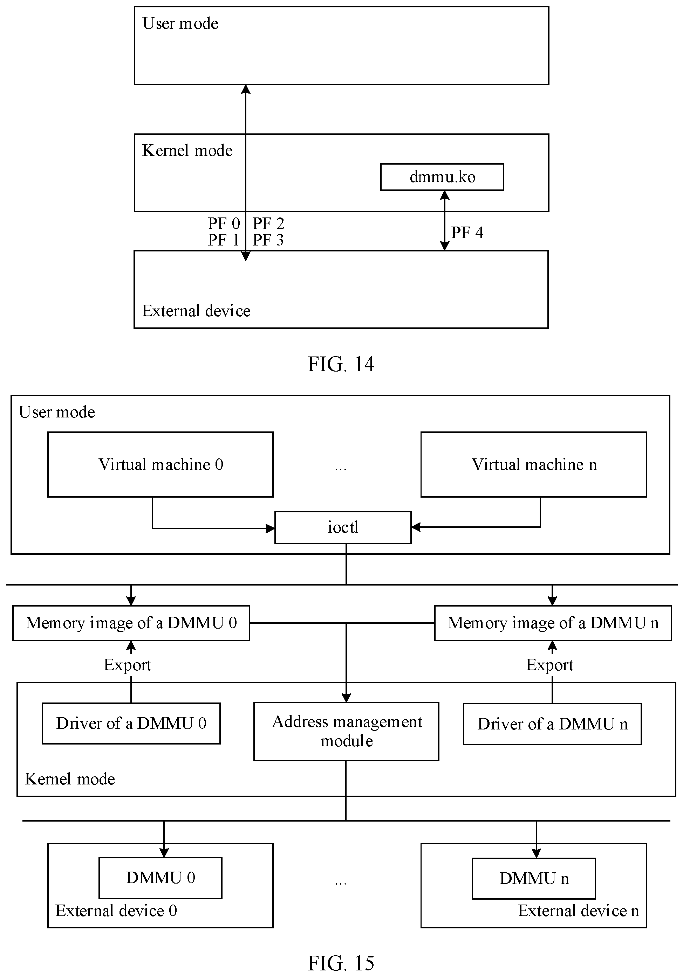

In this application, a stream concurrency manner may be optionally used to improve efficiency of interaction between the kernel mode and the external device. As shown in FIG. 14, a physical function (physical function, PF) device presented by an external device in this application can be initialized, on a server side, by a DMMU driver to a channel for cmdq interaction. For example, a PF 4 device presented by the external device can be initialized, on the server side, by the DMMU driver dmmu.ko into the channel for cmdq interaction, to implement interaction between the kernel mode and the external device. Similarly, the channel for interaction between the user mode and the external device may also be implemented by a PF device presented by the external device, for example, a PF 0, a PF 1, a PF 2, and a PF 3 in FIG. 14.

In this application, one or more external devices may be inserted into one server, that is, a plurality of external devices can coexist. It should be noted that the plurality of external devices need to be isolated from each other. FIG. 15 is a logical diagram in which a plurality of external devices are inserted into a server, and a DMMU is configured in each external device. As shown in FIG. 15, page table resources of a plurality of DMMUs are all stored in a DDR on a host side. A device driver of the DMMU is configured for each DMMU in a kernel of the host, and the device driver of the DMMU manages each virtual machine. Each DMMU is further configured with a DMMU memory image to support memory access. In addition, each virtual machine is used as a domain (domain), and a plurality of VFs connected to the virtual machine share a same page table resource. Therefore, a virtual machine-to-VF mapping table needs to be maintained on a device driver side of the DMMU. The external device side stores basic context information and page table entry cache of the external device. The context information is independent of each VF, and different external devices are isolated from each other. In addition, FIG. 15 is a diagram in which a plurality of external devices are network interface cards, and each network interface card uses a dedicated PF for configuration. In this scenario, a kernel driver performs a probe (probe) operation on each network interface card and exports a dmmu device file. When a virtual machine is started, qemu can find a corresponding device file based on bus device function (bus device function, BDF) information, and then perform operations such as MR delivery based on the device file. The BDF information is used to uniquely identify the VF.

In addition, a granularity of a page table used in this application may be configured based on an application requirement. In addition, in this application, multi-level page table mapping lookup and hash (hash) mapping lookup may be used for page table lookup. For example, for a memory page with a granularity of 4 kilobytes (KB)/8 KB, multi-level page table lookup may be used to save memory space, and for a large page with a large granularity, hash mapping is used to perform lookup, to reduce a lookup latency.

This application is equivalent to that a system layer collaborates with a virtual function input/output (virtual function input/output, VFIO) device driver and a memory management unit (like a DMMU) on an external device to jointly resolve a problem existing in current address translation. When swapping in or out the virtual machine memory, the hypervisor performs an operation on a VFIO driver through a system API, sends feedback to the DMMU of the device to ensure correctness of a DMA of the external device, and updates an EPT table to ensure correctness of a virtual machine address. The external device uses an address translation capability to offload memory address management of the external device to a specific device, so that translation pressure of an IOMMU/SMMU can be alleviated, and virtual address management performance can be improved.

It can be learned from the foregoing that improvements of this application mainly have values in the following two aspects.

1. As a quantity of VFs of a host device gradually increases, the memory management function in this application can prevent operational performance (for example, DMA performance) of an external device from deteriorating. In comparison with the address translation function of the IOMMU/SMMU, in this application, the external device is enabled to directly manage the memory, so that a performance bottleneck of the IOMMU/SMMU can be alleviated, device address translation efficiency can be improved, and address translation can be accelerated.

2. This application can improve public cloud memory utilization, reduce cloud memory costs, resolve a key technology bottleneck of memory overcommitment, and enhance public cloud market competitiveness.

This application can be initially applied to an external device (like a network interface card) of a public cloud, and can be gradually promoted to product lines such as a cloud core and storage in the future. After the standard is formed, this application can be gradually pushed to the community to form a core standard for an IPU/DPU.

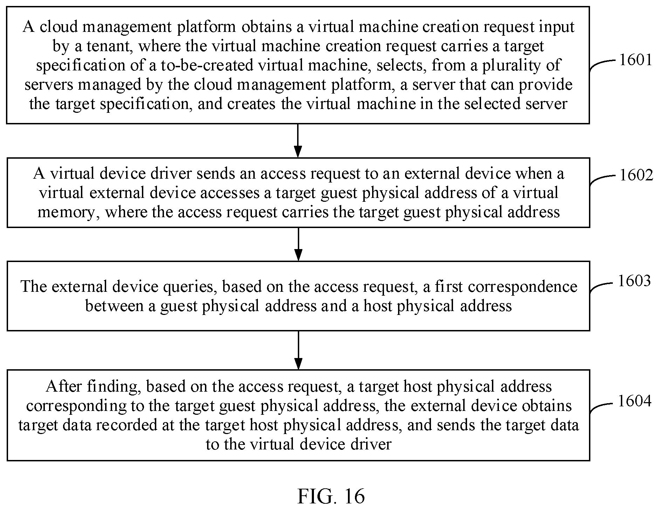

The following describes an implementation process of a method for accessing a public cloud technology-based server system according to an embodiment of this application. FIG. 16 is a flowchart of a method for accessing a public cloud technology-based server system according to an embodiment of this application. As shown in FIG. 16, the method for accessing the public cloud technology-based server system includes the following steps.

Step 1601: A cloud management platform obtains a virtual machine creation request input by a tenant, where the virtual machine creation request carries a target specification of a to-be-created virtual machine, selects, from a plurality of servers managed by the cloud management platform, a server that can provide the target specification, and creates the virtual machine in the selected server.

The cloud management platform is configured to manage an infrastructure, and the infrastructure includes the plurality of servers. When the tenant needs to create the virtual machine based on the infrastructure managed by the cloud management platform, the tenant may perform a specified operation on a client used by the tenant, to trigger the virtual machine creation request, so that the cloud management platform creates the virtual machine for the tenant under an indication of the virtual machine creation request. After the tenant triggers the virtual machine creation request, the cloud management platform can obtain the virtual machine creation request, and obtain the target specification from the virtual machine creation request. After obtaining the target specification set by the tenant, the cloud management platform may select, in the infrastructure, the server that can provide the target specification, and create, in the selected server, the virtual machine that meets the target specification. In a process of creating the virtual machine, a virtual machine manager in the server needs to provide virtual hardware for the virtual machine based on the target specification. For example, the target specification indicates that the virtual machine needs to use a capability of the external device of the server and a capability of a memory of the server. In this case, the virtual machine manager needs to perform device emulation based on the external device to obtain a virtual external device and a virtual device driver of the virtual external device, so that the virtual machine can use the capability of the external device. In addition, the virtual machine manager needs to perform device emulation based on the memory of the server to obtain a virtual memory, so that the virtual machine can use the capability of the memory. The server includes one or more of the following: a memory inserted into the server or a shared memory of the server. In a process of obtaining the virtual memory, the virtual machine manager needs to configure guest physical address space of the virtual memory, and establish a correspondence between a host physical address of a memory block configured in the memory for the external device and a guest physical address in the guest physical address space. In addition, the virtual machine manager needs to send the correspondence to an address management module in a kernel mode of the server.

Step 1602: The virtual device driver sends an access request to the external device when the virtual external device accesses a target guest physical address of the virtual memory, where the access request carries the target guest physical address.

For an implementation process of step 1602, refer to related descriptions in the foregoing server system. It should be noted that, when the server is compatible with an original address translation function, some modifications need to be made in the server, so that the access request using the capability of the external device can be processed by the external device, instead of being processed by the original address translation function of the server, that is, the original address translation function of the server is bypassed (bypassed). In a possible implementation, the function may be implemented by setting configuration space of the external device and/or setting the access request. For example, it may be set that configuration information of the external device indicates that the access request is sent to the external device in a straight-through manner, and the access request indicates that an address carried in the access request is a host physical address obtained through translation. For example, the configuration information of the external device indicates that the external device supports a translated request, and the access request indicates that an address carried in the access request is a host physical address. For an implementation principle thereof, refer to related descriptions in the foregoing server system. Details are not described herein again.

Step 1603: The external device queries, based on the access request, a first correspondence between a guest physical address and a host physical address.

For an implementation process of step 1603, refer to related descriptions in the foregoing server system. Details are not described herein again.

Step 1604: After finding, based on the access request, a target host physical address corresponding to the target guest physical address, the external device obtains target data recorded at the target host physical address, and sends the target data to the virtual device driver.

For an implementation process of step 1604, refer to related descriptions in the foregoing server system. Details are not described herein again.

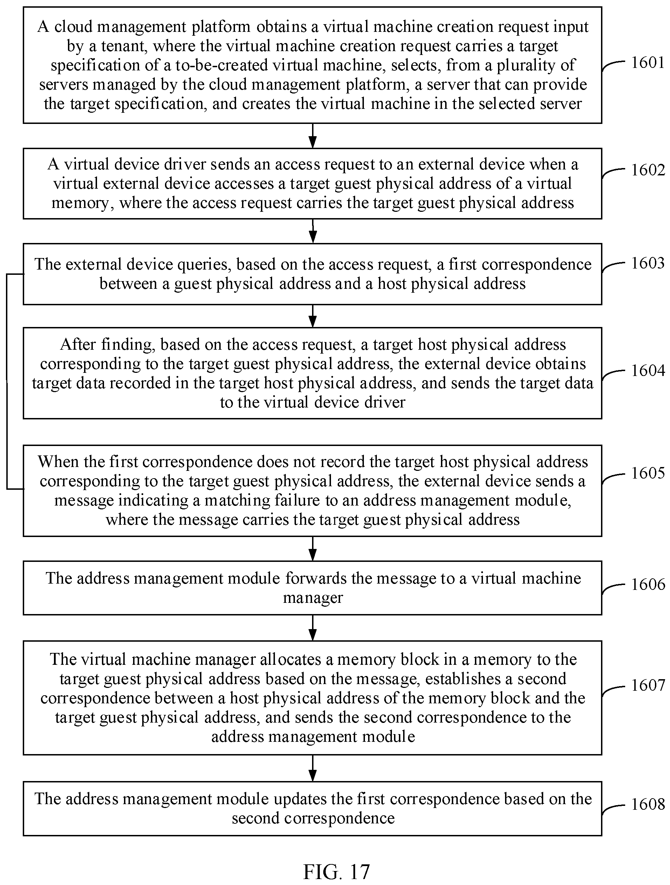

When querying the first correspondence based on the target guest physical address, the external device may find the target host physical address corresponding to the target guest physical address (that is, hit), or may not find the target host physical address corresponding to the target guest physical address (that is, miss). For example, when the address management module does not record the correspondence between the target guest physical address and the corresponding target host physical address, when querying the first correspondence based on the target guest physical address, the external device cannot find the target host physical address corresponding to the target guest physical address. In this case, some processing needs to be performed for this case, so that the corresponding target host physical address can be found based on the target guest physical address. Therefore, as shown in FIG. 17, the access method optionally further includes the following steps.

Step 1605: When the first correspondence does not record the target host physical address corresponding to the target guest physical address, the external device sends a message indicating a matching failure to the address management module, where the message carries the target guest physical address.

For an implementation process of step 1605, refer to related descriptions in the foregoing server system. Details are not described herein again.

Step 1606: The address management module forwards the message to the virtual machine manager.

For an implementation process of step 1606, refer to related descriptions in the foregoing server system. Details are not described herein again.

Step 1607: The virtual machine manager allocates a memory block in the memory for the target guest physical address based on the message, establishes a second correspondence between a host physical address of the memory block and the target guest physical address, and sends the second correspondence to the address management module.

For an implementation process of step 1607, refer to related descriptions in the foregoing server system. Details are not described herein again.

Step 1608: The address management module updates the first correspondence based on the second correspondence.

For an implementation process of step 1608, refer to related descriptions in the foregoing server system. Details are not described herein again.

It can be learned from the foregoing that, it is equivalent to that the server system offloads an address translation function to the external device, so that the external device directly manages memory allocated to the virtual machine, and shares a task of performing address translation on a target guest physical address in an access request. In this way, an address translation device like an IOMMU/SMMU in the server does not need to execute the address translation task, and a TLB of the address translation device like the IOMMU/SMMU in the server does not need to record a correspondence of a target guest physical address accessed by the virtual external device of the external device, thereby reducing a quantity of correspondences that must be recorded in the TLB, and alleviating a conflict between a small quantity of page table entries of the TLB and an excessive quantity of external devices. This reduces a probability of a TLB page fault in an address translation process, effectively improves the address translation performance of the server system, thereby improving operational performance (for example, DMA performance) of the external devices and increasing the efficiency in memory management.

It should be noted that a sequence of steps of the method for accessing the public cloud technology-based server system provided in this embodiment of this application may be properly adjusted, or steps may be correspondingly added or deleted based on a situation. Any variation method readily figured out by a person skilled in the art within the technical scope disclosed in this application shall fall within the protection scope of this application. Therefore, details are not described herein.

The following describes a basic hardware structure in embodiments of this application by using an example.

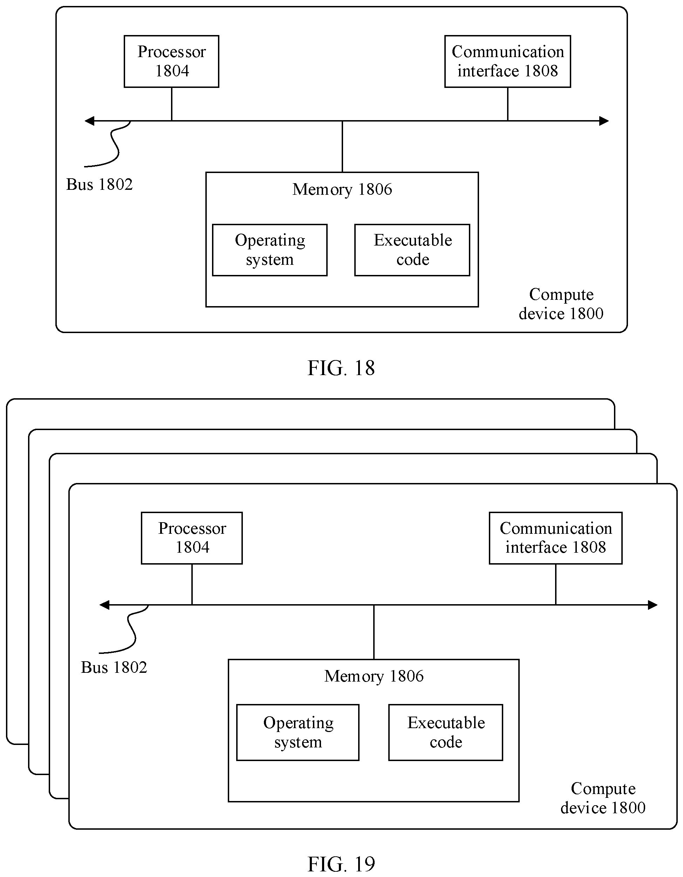

This application further provides a compute device. As shown in FIG. 18, the compute device 1800 includes a bus 1802, a processor 1804, a memory 1806, and a communication interface 1808. The processor 1804, the memory 1806, and the communication interface 1808 communicate with each other through the bus 1802. The compute device 1800 may be a server or a terminal device. It should be understood that quantities of processors and memories in the compute device 1800 are not limited in this application.

The bus 1802 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is indicated by using only one line in FIG. 18. However, it does not indicate that there is only one bus or only one type of bus. The bus 1802 may include a path for transmitting information between components (for example, the memory 1806, the processor 1804, and the communication interface 1808) of the compute device 1800.

The processor 1804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1806 is configured to store a computer program, and the computer program includes an operating system and executable code (namely, program instructions). The memory 1806 may include a volatile memory (volatile memory), for example, a random access memory (random access memory, RAM). The processor 1804 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1806 stores executable program code, and the processor 1804 executes the executable program code to implement the method for accessing the public cloud technology-based server system provided in embodiments of this application. In other words, the memory 1806 stores instructions used to perform the method for accessing the public cloud technology-based server system.

The communication interface 1808 implements communication between the compute device 1800 and another device or a communication network via a transceiver module, for example, but not limited to a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 19, the compute device cluster includes at least one compute device 1800. Memories 1806 of one or more compute devices 1800 in the compute device cluster may store same instructions used to perform the method for accessing the public cloud technology-based server system.

In some possible implementations, the memories 1806 of the one or more compute devices 1800 in the compute device cluster may also separately store a part of instructions used to perform the method for accessing the public cloud technology-based server system. In other words, a combination of one or more compute devices 1800 may jointly execute the instructions used to perform the method for accessing the public cloud technology-based server system.

It should be noted that the memories 1806 of different compute devices 1800 in the compute device cluster may store different instructions, which are respectively used to perform a part of functions of the method for accessing the public cloud technology-based server system. In other words, instructions stored in the memories 1806 of different compute devices 1800 may implement a part of functions of the method for accessing the public cloud technology-based server system.

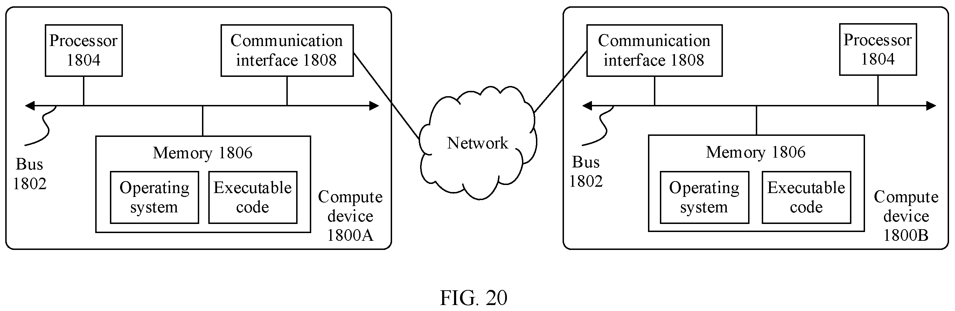

In some possible implementations, the one or more compute devices in the compute device cluster may be connected through a network. The network may be a wide area network, a local area network, or the like. FIG. 20 shows a possible implementation. As shown in FIG. 20, two compute devices 1800A and 1800B are connected through a network. Specifically, the compute devices are connected to the network through communication interfaces of the compute devices.

It should be understood that functions of the compute device 1800A shown in FIG. 20 may alternatively be implemented by a plurality of compute devices 1800. Similarly, functions of the compute device 1800B may alternatively be implemented by the plurality of compute devices 1800.

An embodiment of this application further provides another compute device cluster. For a connection relationship between compute devices in the compute device cluster, refer to the connection manners in the compute device cluster in FIG. 19 and FIG. 20 similarly. A difference lies in that the memories 1806 of one or more compute devices 1800 in the compute device cluster may store same instructions used to perform the method for accessing the public cloud technology-based server system.

In some possible implementations, the memories 1806 of the one or more compute devices 1800 in the compute device cluster may also separately store a part of instructions used to perform a public cloud technology-based memory management method. In other words, a combination of one or more compute devices 1800 may jointly execute the instructions used to perform the method for accessing the public cloud technology-based server system.

An embodiment of this application further provides a server. The server is configured to implement a function of a server in the server system provided in this application. For a working principle and an implementation of the server, refer to related descriptions in the foregoing server system.

An embodiment of this application further provides a method for accessing a public cloud technology-based server system performed by a server provided in this application. The server performs the method, to implement a function of the server in the method for accessing the public cloud technology-based server system provided in this application. For a working principle and an implementation of the server, refer to related descriptions in the foregoing server system.

An embodiment of this application further provides an external device. The external device is configured to implement a function of the external device in the server system provided in this application. For a working principle and an implementation of the external device, refer to the related description in the foregoing server system.

An embodiment of this application further provides a method for accessing a public cloud technology-based server and performed by an external device provided in this application. The external device performs the method, to implement a function of the external device in the method for accessing the public cloud technology-based server system provided in this application. For a working principle and an implementation of the external device, refer to related descriptions in the foregoing server system.

An embodiment of this application further provides a computer program product including instructions. The computer program product may be software or a program product that includes instructions and that can be run on a compute device or stored in any usable medium. When the computer program product runs on at least one compute device, the at least one compute device is enabled to perform the method for accessing the public cloud technology-based server system provided in this application.

An embodiment of this application further provides a computer-readable storage medium. The computer-readable storage medium may be any usable medium that can be stored by a compute device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a compute device to perform a method for accessing a public cloud technology-based server system, or instruct a compute device to perform a method for accessing a public cloud technology-based server system.

A person of ordinary skill in the art may understand that all or a part of the steps of embodiments may be implemented by hardware or a program instructing related hardware. The program may be stored in a computer-readable storage medium. The storage medium may include: a read-only memory, a magnetic disk, or an optical disc.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, original data, executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that, the foregoing embodiments are merely intended to describe the technical solutions of this application, and are not intended to limit this application. Although this application is described in detail with reference to the foregoing embodiments, a person of ordinary skill in the art should understand that modifications may still be made to the technical solutions described in the foregoing embodiments, or equivalent substitutions may be made to a part of the technical features. However, these modifications or substitutions do not make the essence of the corresponding technical solution depart from the scope of the technical solutions of embodiments of this application.

## Claims

1. A public cloud technology-based server system, wherein the server system comprises a server and an external device inserted into the server, and a connection channel is established between the server and the external device;
the server is provided with a virtual machine and a virtual machine manager, the virtual machine manager is configured to provide virtual hardware for the virtual machine, the virtual hardware comprises a virtual external device and a virtual memory, the virtual external device is obtained by device emulation based on the external device, the virtual memory is obtained by device emulation based on a memory configured for the external device, the virtual machine is provided with a virtual device driver for the virtual external device, and the virtual device driver is configured to send an access request to the external device when the virtual external device accesses a target guest physical address of the virtual memory, wherein the access request carries the target guest physical address; and
the external device is configured to: query, based on the access request, a first correspondence between a guest physical address and a host physical address to obtain a target host physical address corresponding to the target guest physical address; obtain target data recorded at the target host physical address; and send the target data to the virtual device driver.

2. The server system according to claim 1, wherein the server is further provided with an address management module;
the external device is further configured to: when the first correspondence does not record the target host physical address corresponding to the target guest physical address, send a message indicating a matching failure to the address management module, wherein the message carries the target guest physical address;
the address management module is configured to forward the message to the virtual machine manager;
the virtual machine manager is configured to: allocate a memory block in the memory for the target guest physical address based on the message, establish a second correspondence between a host physical address of the memory block and the target guest physical address, and send the second correspondence to the address management module; and
the address management module is configured to update the first correspondence based on the second correspondence.

3. The server system according to claim 1 or 2, wherein the server is further provided with the address management module; and
the virtual machine manager is configured to: perform, based on a specification of the virtual machine, device emulation for the virtual machine to obtain the virtual memory; configure guest physical address space of the virtual memory; establish a correspondence between a host physical address of a memory block configured in the memory for the external device and a guest physical address in the guest physical address space; and send the correspondence to the address management module.

4. The server system according to any one of claims 1 to 3, wherein configuration information of the external device indicates that the external device supports a translated request, and the access request indicates that an address carried in the access request is a host physical address.

5. The server system according to any one of claims 1 to 4, wherein the memory configured for the external device comprises one or more of the following: a memory inserted into the server or a shared memory of the server.

6. A method for accessing a public cloud technology-based server system, wherein the server system comprises a server and an external device inserted into the server, a connection channel is established between the server and the external device, the server is provided with a virtual machine and a virtual machine manager, the virtual machine manager is configured to provide virtual hardware for the virtual machine, the virtual hardware comprises a virtual external device and a virtual memory, the virtual external device is obtained by device emulation based on the external device, the virtual memory is obtained by device emulation based on a memory configured for the external device, and the virtual machine is provided with a virtual device driver for the virtual external device; and the method comprises:
sending, by the virtual device driver, an access request to the external device when the virtual external device accesses a target guest physical address of the virtual memory, wherein the access request carries the target guest physical address; and
querying, by the external device based on the access request, a first correspondence between a guest physical address and a host physical address to obtain a target host physical address corresponding to the target guest physical address; obtaining target data recorded at the target host physical address; and sending the target data to the virtual device driver.

7. The method according to claim 6, wherein the server is further provided with an address management module, and the method further comprises:
when the first correspondence does not record the target host physical address corresponding to the target guest physical address, sending, by the external device, a message indicating a matching failure to the address management module, wherein the message carries the target guest physical address;
forwarding, by the address management module, the message to the virtual machine manager;
allocating, by the virtual machine manager, a memory block in the memory for the target guest physical address based on the message, establishing a second correspondence between a host physical address of the memory block and the target guest physical address, and sending the second correspondence to the address management module; and
updating, by the address management module, the first correspondence based on the second correspondence.

8. The method according to claim 6 or 7, wherein the server is further provided with the address management module, and the method further comprises:
performing, by the virtual machine manager based on a specification of the virtual machine, device emulation for the virtual machine to obtain the virtual memory, configuring guest physical address space of the virtual memory, establishing a correspondence between a host physical address of a memory block configured in the memory for the external device and a guest physical address in the guest physical address space, and sending the correspondence to the address management module.

9. The method according to any one of claims 6 to 8, wherein configuration information of the external device indicates that the external device supports a translated request, and the access request indicates that an address carried in the access request is a host physical address.

10. The method according to any one of claims 6 to 9, wherein the memory configured for the external device comprises one or more of the following: a memory inserted into the server or a shared memory of the server.

11. A compute device, comprising a processor and a memory, wherein the memory stores program instructions, and the processor runs the program instructions, to enable the compute device to perform the method according to any one of claims 6 to 10.

12. A computer-readable storage medium, comprising program instructions, wherein when the program instructions are run on a compute device, the compute device is enabled to perform the method according to any one of claims 6 to 10.

13. A computer program product comprising instructions, wherein when the instructions are run by a compute device, the compute device is enabled to perform the method according to any one of claims 6 to 10.
